(19) Europäisches Patentamt
European Patent Office
Office européen des brevets

(11) **EP 2 285 053 B1**

(12) **EUROPEAN PATENT SPECIFICATION**

(45) Date of publication and mention
of the grant of the patent:
**18.01.2012 Bulletin 2012/03**

(51) Int Cl.:
**H04L 25/02** *(2006.01)*

(21) Application number: **09010354.0**

(22) Date of filing: **11.08.2009**

(54) **Concept for adaptively updating filter coefficients**

Konzept zur adaptiven Aktualisierung von Filterkoeffizienten

Concept pour mettre à jour les coefficients de filtre de manière adaptative

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.02.2011 Bulletin 2011/07**

(73) Proprietor: **Fraunhofer-Gesellschaft zur Förderung der angewandten Forschung e.V. 80686 München (DE)**

(72) Inventors:
• **Rohde, Christian 91052 Erlangen (DE)**
• **Lipp, Stefan 90427 Nürnberg (DE)**

(74) Representative: **Zimmermann, Tankred Klaus et al Schoppe, Zimmermann, Stöckeler & Zinkler Patentanwälte Postfach 246 82043 Pullach bei München (DE)**

(56) References cited:
• **CHRISTIAN ROHDE ET AL: "Block processing for one-dimensional adaptive channel estimation algorithms for OFDM systems" WAVEFORM DIVERSITY AND DESIGN CONFERENCE, 2009 INTERNATIONAL, IEEE, PISCATAWAY, NJ, USA, 8 February 2009 (2009-02-08), pages 72-76, XP031436499 ISBN: 978-1-4244-2970-7**
• **C. ROHDE, W. GERSTACKER, B. SCHMIDT, AND W. KOCH: "Comparison of One-Dimensional Adaptive Channel Estimation Techniques for OFDM Systems" INTERNATIONAL OFDM WORKSHOP (INOWO'08), [Online] 27 August 2008 (2008-08-27), - 28 August 2008 (2008-08-28) pages 1-5, XP002564402 Hamburg, Germany Retrieved from the Internet: URL:http://www.nt.e-technik.uni-erlangen.d e/LMK/publikationen/ InOWo08_rohde.pdf> [retrieved on 2010-01-20]**

## Description

The present invention relates to the field of digital signal processing, which may be employed for radio channel estimation as carried out in radio systems as, for example, mobile communication systems.

Radio channel estimation is, for example, used in conventional mobile communication systems, wherein known symbols, also called reference or pilot symbols, are transmitted from a transmitter to a receiver and the receiver estimates the radio channel based on the knowledge of the pilot symbols. As the receiver knows when and how such a pilot symbol is transmitted, the radio channel can be estimated and based on the radio channel estimation, data can be detected eliminating or reducing the effects of the radio channel.

Transmitting a radio signal over a multipath fading channel, the received signal will have unknown amplitude and phase variations. In order to coherently detect the received signal, an accurate channel estimate is essential. The most common technique to obtain channel state information is via pilot aided channel estimation (PACE = Pilot Aided Channel Estimation), where known pilot symbols, using known transmission resources as known time slots or frequencies, termed pilots, are multiplexed with data. If the spacing of the pilots is sufficiently close to satisfy the sampling theorem, channel estimation and interpolation for the entire data sequence is possible. In this context the term spacing refers to time spacing as well as frequency spacing. The separation of pilot symbols is generally chosen less than a coherence time or coherence bandwith of a radio channel, in order to enable interpolation between two pilot symbols in the time and/or frequency direction.

Channel estimation by interpolation of a one dimensional (1D = One Dimensional) signal stream of time domain samples was e.g. devised by Cavers, cf. J. K. Cavers, An Analysis of Pilot Symbol Assisted Modulation for Rayleigh Fading Channels, IEEE Trans. Vehic. Technol., vol. VT-40, pp. 686-693, Nov. 1991. For a multi-carrier transmission system like e.g. orthogonal frequency division multiplexing (OFDM) the received signal is correlated in two dimensions (2D = Two Dimensional), i.e. time and frequency, allowing for 2D channel estimation by interpolation in time and frequency, cf. P. Höher, S. Kaiser, and P. Robertson, Pilot-Symbol-Aided Channel Estimation in Time and Frequency, in Proc. Communication Theory Mini-Conf. (CTMC) within IEEE Global Telecommun. Conf. (Globecom'97), Phoenix, USA, pp. 90-96, 1997.

For the following evaluation of the present invention matrix-vector-notation is used. Vectors are written in bold roman letters, whereas matrices are additionally underlined, like the identity matrix I. The operator $(.)^*$ means conjugate complex, $(.)^T$ matrix or vector transpose and $(.)^H$ hermitian, meaning conjugate transpose matrix or vector. The expectation operator is denoted as $E\{.\}$, the Euclidean vector norm as $||.||$ and the Frobenius matrix norm as $||.||_F$.

Considering a multi-carrier transmission system like e.g. OFDM, at a transmitter side $M$ complex symbols $X_m$[$v$] with frequency or sub-carrier index $m \in \{0,...,M\text{-}1\}$ and time index $v$ form a frequency-domain transmit vector $\boldsymbol{X}[v]$. This vector as well as its time domain representation is also commonly denoted as OFDM symbol. A sub-carrier distance in Hertz (Hz) is denoted by $\delta f$. Data symbols are multiplexed with pilot symbols, which are known to a receiver.

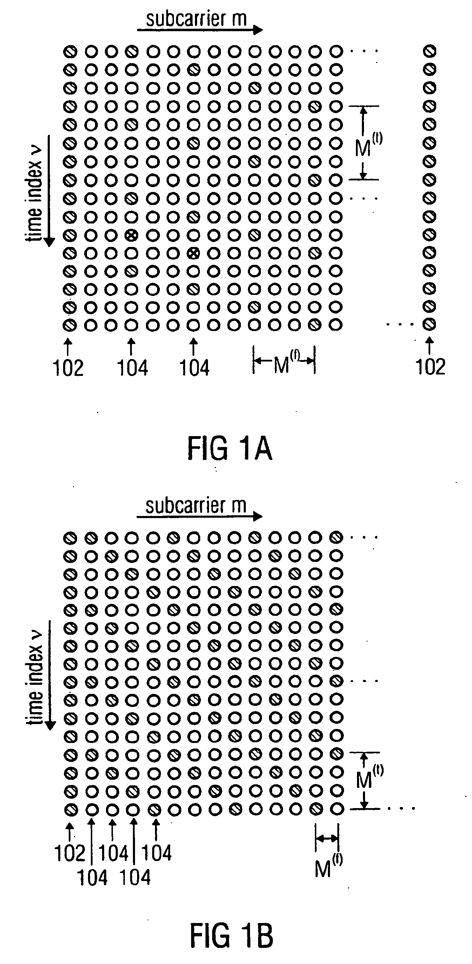

Pilot symbols are inserted in $\boldsymbol{X}[v]$ according to a pilot pattern IP, that defines pilot cell indices $(m,v)$. Figs. 1a and 1b show possible examples for pilot patterns IP by the frequency domain representation of the OFDM signal.

Figs. 1a and 1b will be used to define the technology used throughout this specification. The horizontal dimension represents the frequency or sub-carrier indexing direction and the vertical dimension represents the time indexing direction. Each black circle will be referred to as a pilot cell position and each white circle will be referred to as a data cell position or a non-pilot cell position. Each row in Figs. 1a, b corresponds to a distinct OFDM symbol and each column will be referred to as a sub-carrier. A column with only pilot cell positions such as the far left and the far right columns will be referred to as a continuous pilot sub-carrier. A row with only pilot cell positions may be referred to as a continuous pilot symbol. Each pilot cell position in a continuous pilot sub-carrier or in a continuous pilot symbol will be referred to as a continuous pilot symbol position. Each column with both pilot cells and data cells will be referred to as scattered pilot subcarrier, and each row with both pilot cell positions and data cell positions will be referred to as a scatterd pilot symbol. Each pilot cell position in a scattered pilot subcarrier or in a scattered pilot symbol will be referred to as scattered pilot cell position. The column with only data cell positions will be referred to as non-pilot subcarrier, and a row with only data cell positions will be referred to as non-pilot symbol. Note, that in Figs. 1a, b there are neither continuous pilot symbols nor non-pilot symbols.

Each pilot pattern IP can be split into a scattered pilot index set $IP_{sp}$ and a continuous pilot index set $IP_{cp}$ with IP = $IP_{sp}$ U $IP_{cp}$. Continuous pilots are present at $M_{cp}$ specific continuous pilot sub-carriers 102 for every OFDM symbol opposed to $M_{sp}$ scattered pilots per OFDM symbol. On each scattered pilot sub-carrier m $\in$ $IP_{sp}$, 104, the scattered pilot cells are $M^{(t)}$ OFDM symbols apart from neighboring scattered pilot cells. In Figs. 1a and 1b the scattered pilot sub-carriers $m \in IP_{sp}$ correspond to columns, where scattered pilot cells are present. $M^{(t)}$ denotes a minimal distance in time direction between two scattered pilot positions. For all time indices v the previously mentioned columns of scattered pilots are $M^{(f)}$ sub-carriers away from the neighbor columns.

A typical example of an OFDM-system can be seen in the DVB-T (Digital Video Broadcasting Terrestrial) specification. DVB-T uses OFDM modulation with 2k or 8k sub-carriers. For the 2k-mode, $M_{cp} = 45$ sub-carriers are used as continuous pilot sub-carriers. For the 8k-mode, $M_{cp}$ = 177 sub-carriers are used as continuous pilot sub-carriers. The DVB-H (Digital Video Broadcasting - Handhelds) specification is based on DVB-T, but tailored to mobile/handheld applications. In DVB-H, an additional 4k-mode is defined.

In Fig. 1a, in every symbol v, some sub-carriers m are used as scattered pilot sub-carriers 104. Scattered pilot subcarriers having the same constellation are twelve subcarriers apart in frequency. Pilot cell positions are shifted by three every symbol. As a result, the scattered pilot positions are $M^{(t)}$ = 4 symbols apart in time and $M^{(f)}$ = 3 sub-carriers apart in frequency direction. The pattern of Fig. 1b has $M^{(t)}$ = 4 and $M^{(f)}$ = 1. The values are constant, as regular pilot patterns IP are considered. However, irregular patterns do not constrain embodiments of the present invention. At all non-pilot positions data signals are transmitted.

Since the pilot signals are known to a receiver, they can be used by the receiver to calculate the channel transfer functions of the respective sub-carriers at those particular times/frequencies $(m,v) \in$ IP.

In case of an OFDM system, an $M$-point inverse fast Fourier transform (IFFT) of $\boldsymbol{X}[v]$ for generation of a time domain transmit sequence and insertion of a cyclic prefix is performed. The OFDM symbols are transmitted over a frequency-selective fading channel and white Gaussian noise is added.

At a receiver, assuming perfect timing and frequency synchronization, an M-point fast Fourier transform (FFT) is applied after a guard interval removal in order to obtain frequency domain receive symbols. The frequency domain receive symbols result as

$$Y_m[v] = H_m[v] \cdot X_m[v] + N_m[v], \qquad (1)$$

with sub-carrier-and-time-specific samples $H_m[v]$ of the in general time-variant and frequency-selective channel transfer function and a sub-carrier-and-time-specific noise component $N_m[v]$.

For channel estimation, the pilot cells with $(m,v) \in$ IP are first evaluated to get least-squares (LS) estimates $\tilde{H}_m[v]$ of the channel transfer function by

$$\tilde{H}_m[v] = Y_m[v]/X_m[v] + \tilde{N}[v] = H_m[v] + \tilde{N}_m[v], \qquad (2)$$

with $\tilde{H}_m[v]$ = 0 for $(m, v) \notin$ IP. In Eq. (2) $H_m[v]$ denotes an ideal channel-coefficient for sub-carrier m and time instant v, wherein $\tilde{N}_m[v]$ denotes a Gaussian noise term. The aim of the channel estimation is to interpolate between the disturbed values of $H_m[v]$ to finally get an as precise as possible estimate of the channel transfer function for all discrete sub-carriers m and time-instants v.

Several algorithms have been proposed in the past in order to solve the described 2-dimensional channel estimation problem which arises for multi-carrier systems.

An optimal method for pilot-aided channel estimation in the frequency domain of a multi-carrier transmission system is 2D Wiener filtering, which is, however, in general computationally too extensive. To reduce complexity, a 2 x 1D channel estimator with $q^{(t)}$ filter taps in time direction and $q^{(f)}$ filter taps in frequency direction may be used instead of full 2D filtering, which leads to only marginal performance degradations if one studies the performance for the same number of filter taps q according to $q_{2D} \leftrightarrow q^{(t)} \cdot q^{(f)}$, see P. Hoeher, S. Kaiser, P. Robertson, Two-dimensional pilot-symbol-aided channel estimation by Wiener filtering. In Proc. ICASSP 1997, IEEE International Conference on Acoustics, Speech, and Signal Processing, volume 3, pages 1845-1848, April 1997. The 2 x 1D estimation may be done separately in time direction as a first step and in frequency direction as second step. However, calculating new Wiener filters each time the channel conditions change drives the complexity of an implementation.

A low density pilot pattern IP as shown in Fig. 1a is developed for such a 2 x 1D channel estimation. Full use of the pattern IP can be achieved by first applying a 1D interpolation in time direction in order to interpolate between the scattered pilots of the scattered pilot subcarriers 104 m e $IP_{sp}$. Then, in case of Fig. 1a, at every third column or sub-carrier, channel estimates are present. The second 1D stage interpolates in frequency direction using the results of the previous stage. However, in case of a dense pilot pattern as shown in Fig. 1b, one 1D stage suffices to fill the pattern completely. One 1D stage for interpolation in frequency direction may also be sufficient for the pattern of Fig. 1a with making full use of the pattern IP.

Regarding Eq. (2), as a second step after LS-estimation, an interpolation filter $\mathbf{w}_m[v]$ may be applied to an LS estimates column vector,

$$\hat{H}_m[\nu] = \mathbf{w}_m^H[\nu]\tilde{\mathbf{H}}_m[\nu] \,, \qquad\qquad (3)$$

where $\tilde{\mathbf{H}}_m[\nu]$ contains all LS estimates, contributing to an interpolation result at sub-carrier m and symbol v. For the case of interpolation only in time direction, $\tilde{\mathbf{H}}_m[\nu]$ contains $q_{1D}^{(t)}$ non-zero values $\tilde{H}_m[\cdot]$ of the same sub-carrier m, which are $M^{(t)}$ symbols apart. This implies an application of Eq. (3) solely at pilot sub-carriers $m \in$ IP. At this point, the following LS vector with $q_{1D}^{(t)} = 6$ is chosen as an example:

$$\tilde{\mathbf{H}}_m[\nu] = [\tilde{H}_m[\nu - 10]\,\tilde{H}_m[\nu - 6]\,\tilde{H}_m[\nu - 2]\,\tilde{H}_m[\nu + 2]\,\tilde{H}_m[\nu + 6]\,\tilde{H}_m[\nu + 10]]^T . \quad (4)$$

In Fig. 1a two cells in column $m = 3$ and $m = 6$ of the considered pilot pattern IP are exemplarily marked with crosses as the corresponding filter results $\hat{H}m[\nu]$. Note, that the described interpolation can be applied only to every third data cell and therefore also two other filters are necessary for complete interpolation at sub-carriers $m \in$ $IP_{sp}$. Using Eq. (4) for further considerations, the indices $m$, $v$ are dropped for the filter vector $\mathbf{w}$.
An optimal filter coefficient vector $\mathbf{w}^{(opt)}$ minimizes the cost function

$$J = E\left\{\left|H_m[\nu] - \hat{H}_m[\nu]\right|^2\right\} = \sigma_h^2 - \varphi^H\mathbf{w} - \mathbf{w}^H\varphi + \mathbf{w}^H\underline{\Phi}\mathbf{w} \,, \qquad (5)$$

which expresses the mean-squared estimation error (MSE) with the definition of the autocorrelation matrix (ACM) and the crosscorrelation vector (CCV)

$$\underline{\Phi} = E\left\{\tilde{\mathbf{H}}_m[\nu]\tilde{\mathbf{H}}_m^H[\nu]\right\}, \qquad (6)$$

$$\varphi = E\left\{\tilde{\mathbf{H}}_m[\nu]H_m^*[\nu]\right\}, \qquad (7)$$

and the channel variance $\sigma_h^2 = E\{H_m[\nu]H_m^*[\nu]\}$. Apart from the additive noise variance $\sigma_{\tilde{N}}^2$ on the ACM main diagonal, the elements of the ACM and CCV are values of the discrete channel autocorrelation function (ACF) $\varphi_H[\Delta m, \Delta v]$. In the WSSUS (wide-sense stationary uncorrelated scattering) model, time and frequency correlation are assumed to be independent, which leads to

$$\varphi_H[\Delta m = 0, \Delta\nu] = \varphi_H^{(f)}[\Delta m = 0] \cdot \varphi_H^{(t)}[\Delta\nu] = 1 \cdot J_0(2\pi f_{D,\max}\Delta\nu T) \,, \qquad (8)$$

where $J_0(\cdot)$ denotes the Bessel function of the first kind with order zero and $f_{D,max}$ the maximum Doppler frequency. Here, the classical Jakes' spectrum is supposed.
The derivative of (5) w.r.t. $\mathbf{w}^*$ via Wirtinger's calculus yields the gradient of the cost function. Setting the gradient to zero, the optimum filter vector and the minimum error variance are deduced.

$$\nabla J = \frac{\partial J}{\partial \mathbf{w}^*} = -\varphi + \underline{\mathbf{\Phi}} w = 0 \qquad (9)$$

$$\Rightarrow \mathbf{w}^{opt} = \underline{\mathbf{\Phi}}^{-1}\varphi \qquad (10)$$

$$\Rightarrow J_{\min} = \sigma_h^2 - \varphi^H \mathbf{w}^{opt} \qquad (11)$$

To avoid the inversion of the commonly unknown channel ACM in Eq. (10), the filter coefficients can e.g. be calculated in a recursive way via the LMS algorithm,

$$\mathbf{w}[v+1] = \mathbf{w}[v] - \mu \cdot \nabla \hat{J}[v] \qquad (12)$$

where $\mu$ denotes the step size parameter and instead of the gradient $\nabla J$ an instantaneous estimate $\nabla \hat{J}[v]$ at one subcarrier $m \in IP_{cp}$ is used. For convenience, the index m has been dropped here as well. $\nabla \hat{J}[v]$ is formed using instantaneous estimates of the ACM and CCV,

$$\underline{\mathbf{\Phi}} \approx \hat{\underline{\mathbf{\Phi}}}[v] = \widetilde{\mathbf{H}}[v] \cdot \widetilde{\mathbf{H}}^H[v], \qquad (13)$$

$$\varphi \approx \hat{\varphi}[v] = \widetilde{\mathbf{H}}[v] \cdot \widetilde{H}^*[v], \qquad (14)$$

which leads with Eq. (9) to

$$\nabla \hat{J}[v] = -\widetilde{\mathbf{H}}[v] \cdot \left[ \widetilde{H}^*[v] - \widetilde{\mathbf{H}}^H[v]\mathbf{w}[v] \right]. \qquad (15)$$

For the normalized LMS (NLMS) algorithm the step size parameter is additionally scaled by the filter input power $\mu' = \mu/\|\widetilde{\mathbf{H}}\|^2$. This modification makes the choice of $\mu$

independent of the channel statistics, because the interval of the theoretically assured convergence $\mu \in (0; \frac{2}{\lambda_{\max}})$ for the LMS algorithm with the maximum ACM eigenvalue $\lambda_{\max}$ is replaced by the requirement $\mu \in (0;2)$.

Finally, the following NLMS scheme is deduced with initialization by an all-zero vector $\mathbf{w}[0]=\mathbf{0}$.

1. Filtering:

$$\hat{H}[v] = \mathbf{w}^H[v]\widetilde{\mathbf{H}}[v] \qquad (16)$$

2. Determine error:

$$E[v] = \widetilde{H}[v] - \hat{H}[v] \qquad (17)$$

3. Coefficient update:

$$\mathbf{w}[v+1] = \mathbf{w}[v] + \frac{\mu}{\left\|\widetilde{\mathbf{H}}[v]\right\|^2} \cdot \widetilde{\mathbf{H}}[v] \cdot E^*[v] \quad (18)$$

Note, that in Eq. (18) $v$ denotes the OFDM symbol index as well as the NLMS recursion index. The update scheme is applied to one sub-carrier $m \in IP_{cp}$ and is valid for all other sub-carriers since the statistical channel properties, such as e.g. correlation properties, are approximately the same for all sub-carrier-channels since a used bandwidth is negligible in view of a used carrier frequency of a multicarrier-system. In the context of the present invention the individual sub-carrier-channels, hence, represent different realizations of a stochastic process having statistical properties, which are common to all realizations or sub-carriers.

The LMS algorithm deteriorates in case of a low carrier-to-noise ratio $C/N$ of the sub-carrier used for udating the filter coefficients. A block processing approach may increase the robustness, exploiting that the ACF (8) is the same for each sub-carrier. Extending the minimum MSE concept to block processing over $M_{cp}$ continuous pilot subcarriers at time v, the cost function may be modified to

$$J^{(B)} = \frac{1}{M_{cp}} \sum_{m \in IP_{cp}} E\left\{\left|H_m[v] - \hat{H}_m[v]\right|^2\right\}. \quad (19)$$

$J_{\min}^{(B)} = J_{\min}$ and the same constraints for the choice of the step size $\mu$ are valid due to normalization to $M_{cp}$. Similar to the previous derivations, the following estimated error gradient results:

$$\nabla \hat{J}^{(B)}[v] = \frac{1}{M_{cp}} \sum_{m \in IP_{cp}} \left(-\hat{\varphi}_m[v] + \hat{\mathbf{\Phi}}_m[v]\mathbf{w}[v]\right) \quad (20)$$

$$= \frac{1}{M_{cp}} \sum_{m \in IP_{cp}} \widetilde{\mathbf{H}}_m[v]\left[\widetilde{H}_m^*[v] - \widetilde{\mathbf{H}}_m^H[v]\mathbf{w}[v]\right] = \frac{1}{M_{cp}} \sum_{m \in IP_{cp}} \nabla \hat{J}_m[v]. \quad (21)$$

Hence, Eq. (21) shows an averaging over $M_{cp}$ gradient estimates opposed to a single one in Eq. (15).
Including the normalization of each gradient $\nabla J_{ml}[v]$ by the corresponding filter input power, the recursion of the resulting normalized block least-mean-square (NBLMS) algorithm after initialization with $\mathbf{w}[0]=\mathbf{0}$ reads

1.

$$\hat{H}_m[v] = \mathbf{w}^H[v]\widetilde{\mathbf{H}}_m[v], \quad \forall m \in IP_{cp} \quad (22)$$

2.

$$E_m[v] = \widetilde{H}_m[v] - \hat{H}_m[v], \quad \forall m \in IP_{cp} \quad (23)$$

3.

$$\mathbf{w}[\nu+1] = \mathbf{w}[\nu] + \frac{\mu}{M_{cp}} \cdot \sum_{m \in IP_{cp}} \frac{1}{\left\|\tilde{\mathbf{H}}_m[\nu]\right\|^2} \tilde{\mathbf{H}}_m[\nu] \cdot E_m^*[\nu] \qquad (24)$$

As set out before, the common least-mean-square (LMS) algorithm for adaptive filter coefficient or parameter calculation is applied to a single stream of realizations of a stochastic process, like, for example, a single subcarrier of a channel transfer function. Normalizing the LMS with respect to the filter input power generally improves robustness and convergence speed. Further enhancement can additionally be achieved by block processing, meaning the usage of several realizations or several slices of a single realization of a stochastic process per update step, resulting in the block least-mean-squares algorithm. However, for a combination of normalization and block processing of $M_{cp}$ realizations of the stochastic process, i. e., the channel transfer function, one division per realization of the stochastic process has to be performed (see Eq. 24). Thus, $M_{cp}$ divisions have to be performed per NBLMS-iteration. Furthermore, in case one of the $M_{cp}$ realizations has only very small energy, for example, in case one of the sub-carriers is in a deep fade, numerical instability of the NBLMS algorithm may be the consequence.

The above mentioned normalized block least-mean-square (NBLMS) algorithm is described by C. Rohde, et al: "Block Processing for One-Dimensional Adaptive Channel Estimation Algorithms for OFDM Systems", Waveform Diversity and Design Conference, 2009 International, IEEE, Piscataway, NJ, USA, February 8, 2009, pages 72-36, and by Rohde, et al: "Comparison of One-Dimensional Adaptive Channel Estimation Techniques for OFDM Systems" International OFDM Workshop (INOWO'08), August 28, 2008, pages 1-5, Hamburg, Germany.

It is an object of the present invention to provide an improved concept for an adaptive filter update.

This object is solved by an apparatus according to claim 1 and a method according to claim 11.

The present invention is based on the following finding:

In Eq. (24) the filter input power $\|\tilde{H}_m[\nu]\|^2$ has been chosen for normalization of the gradients as an estimate or approximation of the maximum eigenvalue of the autocorrelation matrix $\lambda_{\max}\{\underline{\Phi}\}$:

$$\lambda_{\max}\{\underline{\Phi}\} \approx \lambda_{\max}\{\hat{\underline{\Phi}}_m[\nu]\} = \lambda_{\max}\left\{\tilde{H}_m[\nu]\tilde{H}_m^H[\nu]\right\} = \|\tilde{H}_m[\nu]\|^2 \qquad (25)$$

Assuming, that the estimate in Eq. (25) would be perfect, i.e. $\lambda_{\max}\{\underline{\Phi}\} = \lambda_{\max}\{\hat{\underline{\Phi}}_m[\nu]\}$ the normalized gradient term of Eq. (24)

$$\frac{1}{M_{cp}} \cdot \sum_{m \in IP_{cp}} \frac{1}{\left\|\tilde{\mathbf{H}}_m[\nu]\right\|^2} \tilde{\mathbf{H}}_m[\nu] \cdot E_m^*[\nu] \qquad (26)$$

may be rewritten as

$$\frac{1}{M_{cp} \cdot \lambda_{\max}\{\underline{\Phi}\}} \cdot \sum_{m \in P_{cp}} \tilde{H}_m[\nu] \cdot E_m^*[\nu] \qquad (27)$$

Then one may use the fact that $M_{cp} \cdot \lambda_{\max}\{\underline{\Phi}\}$ is the result of summing up $M_{cp}$ values of $\lambda_{\max}\{\underline{\Phi}\}$. Dropping the assumption of perfect estimates of $\lambda_{\max}\{\underline{\Phi}\}$, the considered summation would be calculated over all $\lambda_{\max}\{\hat{\underline{\Phi}}_m[\nu]\}$, which leads to the normalized gradient term

$$\frac{1}{\sum\limits_{m\in P_{cp}} \lambda_{\max}\left\{\hat{\Phi}_m[\nu]\right\}} \cdot \sum\limits_{m\in P_{cp}} \tilde{H}_m[\nu]\cdot E_m^*[\nu] = \tag{28}$$

$$= \frac{1}{\sum\limits_{m\in P_{cp}} \|\tilde{H}_m[\nu]\|^2} \cdot \sum\limits_{m\in P_{cp}} \tilde{H}_m[\nu]\cdot E_m^*[\nu] \tag{29}$$

Using Eq. (29) in Eq. (24) only one division has to be calculated per update instead of $M_{cp}$ divisions. Furthermore, the probability of the critical case of a very small value in the denominator is significantly reduced, because the denominator sum accumulates the power of all filter input vectors $\tilde{H}_m[\nu]$, $m \in IP_{cp}$. These are the two major and novel improvements of embodiments of the present invention.

For an implementation of the inventive concept, embodiments of the present invention provide an apparatus for adaptively updating previous filter coefficients $w[\nu]$ of a digital filter to obtain updated filter coefficients $w[\nu+1]$. The apparatus thereby comprises an input for receiving a plurality of filter input vectors $\tilde{H}_m[\nu]$, each comprising a plurality of reference samples of different realizations of a stochastic process. That means, that the plurality of reference samples of a particular filter input vector may either stem from a corresponding realization of the stochastic process or that each of the plurality of reference samples of a particular filter input vector may stem from a different one of the plurality of realizations of the stochastic process, however, all reference samples of the particular filter input vector corresponding to a certain time-instant. Further, the apparatus comprises a filter for filtering each of the filter input vectors $\tilde{H}_m[\nu]$ based on the previous filter coefficients $w[\nu]$ to obtain a plurality of filter output values $\hat{H}_m[\nu]$, an error-processor for determining, for each of the filter output values $\hat{H}_m[\nu]$, an error value $E_m[\nu]$ between the filter output value $\hat{H}_m[\nu]$ and a related or corresponding reference sample $\tilde{H}_m[\nu]$ of a corresponding realization of the stochastic process. The apparatus also comprises a coefficient-processor for determining the updated filter coefficients $w[\nu+1]$ based on the previous filter coefficients $w[\nu]$ and a normalized result derived from a combination of the plurality of filter input vectors $\tilde{H}_m[\nu]$ and the plurality of error values $E_m[\nu]$, wherein the normalization is based on a value derived from the plurality of filter input vectors $\tilde{H}_m[\nu]$.

In case the filter input vectors $\tilde{H}_m[\nu]$ are arranged as columns of a filter input matrix $\tilde{\underline{H}}[\nu]$ according to

$$\tilde{\underline{H}}[\nu] = [\tilde{\mathbf{H}}_1[\nu]\,\tilde{\mathbf{H}}_2[\nu]\ldots\tilde{\mathbf{H}}_{M_{cp}}[\nu]] \tag{30}$$

and the error values $E_m[\nu]$ are arranged in an error vector $\mathbf{E}[\nu]$ according to

$$\mathbf{E}[\nu] = [E_1[\nu]\,E_2[\nu]\ldots E_{M_{cp}}[\nu]], \tag{31}$$

the normalized gradient term of Eq. (29) may also be written as

$$\frac{1}{\left\|\tilde{\underline{H}}[\nu]\right\|_F^2}\,\tilde{\underline{H}}[\nu]\mathbf{E}^H[\nu]. \tag{32}$$

Hence, the updated filter coefficients $w[\nu+1]$ may be determined based on the previous filter coefficients $w[\nu]$ and a normalized cross-correlation vector $\tilde{\underline{H}}[\nu]\mathbf{E}^H[\nu]$ between the filter input matrix $\tilde{\underline{H}}[\nu]$ and the error vector $\mathbf{E}[\nu]$, wherein the normalization is based on a matrix norm, in particular a Frobenius matrix norm, of the filter input matrix $\tilde{\underline{H}}[\nu]$ as shown in Eq. (32).

When compared to the NBLMS-algorithm (Eqs. (22) - (24)), the proposed concept reduces the necessary $M_{cp}$ divisions to one single division per update-iteration, but keeps nearly a whole block processing and normalizing gain.

One possible application of the inventive concept is adaptive channel estimation at a receiver of a multi-carrier transmission system, like, for example, orthogonal frequency division multiplexing, wherein the inventive concept may be used for interpolation of channel coefficients in time direction as well as for interpolation in frequency or sub-carrier direction.

In the following, embodiments of the present invention will be explained in more detail with respect to the accompanying drawings, in which:

Fig. 1a      shows an example of a pilot insertion pattern for multi-carrier systems;

Fig. 1b      shows a further example of a pilot insertion pattern for multi-carrier systems;

Fig. 2       shows a high-level flow chart of a channel- estimation method according to an embodiment of the present invention;

Fig. 3       shows a block diagram of a time direction interpolation stage of an inventive channel- estimation.

Fig. 4       shows a block diagram of an apparatus for adaptively updating filter coefficients according to an embodiment of the present invention;

Fig. 5       shows an interpolated pilot pattern after interpolation in the time direction;

Fig. 6       shows a schematic diagram of a second interpolation stage in the frequency direction;

Fig. 7       shows a block diagram of an interpolator-based channel estimator according to an embodiment of the present invention,

Fig. 8a      Cost functions (ensemble averaged) for various algorithms, different $M_{cp}$, $C/N$ = 0, 10, 20 dB, $f_{D,max}$=100 Hz and $\mu$= 0.1;

Fig. 8b      Cost functions (ensemble averaged) for various algorithms, different $M_{cp}$, $C/N$ = 0, 10, 20 dB, $f_{D,max}$ = 200 Hz and $\mu$ = 0.1;

Fig. 8c      Cost functions (ensemble averaged) for various algorithms, different $M_{cp}$, $C/N$ = 0, 10, 20 dB, $f_{D,max}$ = 100 Hz and $\mu$ = 0.4; and

Fig. 8d      Cost functions (ensemble averaged) for various algorithms, different $M_{cp}$, $C/N$ = 0, 10, 20 dB, $f_{D,max}$ = 200 Hz and $\mu$ = 0.4.

The following description sets forth specific details, such as particular embodiments, procedures, techniques, etc. for purposes of explanation and not limitation. But it will be appreciated by one skilled in the art that other embodiments may be employed apart from these specific details. For example, although the following description is facilitated using non-limiting example applications to adaptive channel estimation for multi-carrier transmission systems. The technology may be also employed for other applications, where normalized block least-mean-square filters are advantageous. In some instances, detailed descriptions of well-known methods, interfaces, circuits, and devices are omitted so as to not obscure the description with unnecessary detail. Moreover, individual blocks are shown in some of the figures. Those skilled in the art will appreciate that the function of those blocks may be implemented using individual hardware circuits, using software programs and data in conjunction with a suitable programmed digital microprocessor or general purpose computer, using application-specific integrated circuitry (ASIC), and/or using one or more digital signal processors (DSPs).

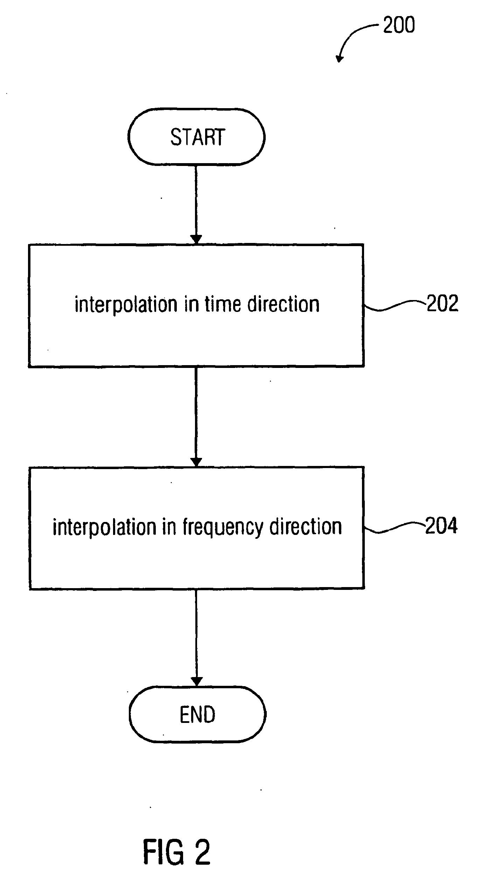

As already described before, the inventive concept may be employed for pilot-aided channel estimation techniques for multi-carrier transmission systems. A principle flow chart of a channel estimation method according to an embodiment of the present invention is shown in Fig. 2.

A proposed pilot-aided channel estimation method 200 consists of two stages or steps 202, 204 to implement a 2 x 1D channel estimation. Both stages may make use of the inventive concept for updating filter coefficients w. The first stage 202 provides an interpolation of channel coefficients in time direction (time index v), wherein the second stage 204 provides an interpolation of channel coefficients in frequency direction (sub-carrier index m).

However, depending on the pilot pattern IP or, in order to satisfy possible complexity constraints, each of the two stages 202, 204 may also be used separately as a 1D channel estimator. As the two stages 202, 204 are independent of each other, a combination of one of the 1D stages with a foreign concept is also possible. Furthermore, the order of the two stages may also be 204 followed by 202.

In the following, the first stage 202 of the inventive channel estimation concept shall be explained in more detail.

The first stage 202, i.e., filtering in time direction, is performed at scattered pilot sub-carriers m ∈ $IP_{sp}$ for the purpose of interpolation and smoothing. Smoothing means, as opposed to interpolation, that a result of the filtering is located at a LS estimate position (m,v) ∈ IP to lower a noise level of the respective LS channel estimate. However, it is not mandatory to perform smoothing. But if so, attention has to be paid to the order of interpolation and smoothing, whereas embodiments of the present invention support both orders.

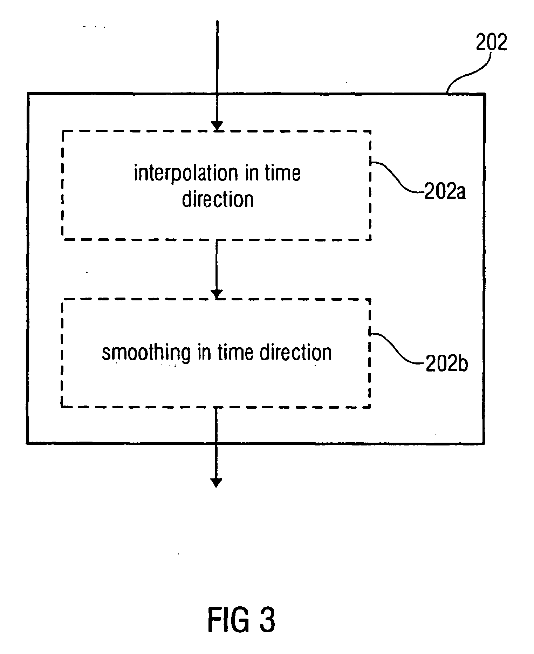

First smoothing and secondly interpolation deduces that the interpolation quality and convergence depends on the smoothing quality and an actual state of convergence. The other case of smoothing after interpolation avoids this dependency and is considered in the following without excluding the possibility of choosing the other order or even omitting the smoothing. Hence, the first stage 202, i.e., the filtering in time direction, may be divided into sub-stages or sub-steps 202a, 202b, wherein sub-stage 202a denotes an interpolation stage and sub-stage 202b denotes a smoothing stage, see Fig. 3. Note again, that smoothing is considered optional.

The filtering in time direction 202a is performed both at scattered pilot sub-carriers m ∈ $IP_{sp}$ and continuous pilot sub-carriers m ∈ $IP_{cp}$ for the purpose of performing an update of filter coefficient vectors $\mathbf{w}[v]$, as will be explained in more detail in the following.

In general, $M^{(t)}$-1 different filter vectors are necessary for the interpolation in time direction between the scattered pilot LS estimates, one filter vector for smoothing at scattered pilot sub-carriers m ∈ $IP_{sp}$ and one filter vector for smoothing at continuous pilot sub-carriers m ∈ $IP_{cp}$.

According to the exemplary pilot patterns IP shown in Fig. 1a, there are three filter vectors $\mathbf{w}_{(t)1}$, $\mathbf{w}_{(t)2}$, $\mathbf{w}_{(t)3}$ of length $q^{(t)}$ corresponding to the three different interpolation positions at all scattered pilot sub-carriers m ∈ $IP_{sp}$. The corresponding filter input vectors or LS estimate vectors are exemplarily defined by

$$\tilde{\mathbf{H}}_m^{(1)}[\nu] = \left[ \tilde{H}_m[\nu - 4q_a^{(t)} + 3] \quad \tilde{H}_m[\nu - 5] \quad \tilde{H}_m[\nu - 1] \right. \ldots$$

$$\left. \tilde{H}_m[\nu + 3] \quad \tilde{H}_m[\nu + 7] \quad \tilde{H}_m[\nu + 4q_b^{(t)} - 1] \right]^T \tag{33}$$

$$\tilde{\mathbf{H}}_m^{(2)}[\nu] = \left[ \tilde{H}_m[\nu - 4q_a^{(t)} + 2] \quad \tilde{H}_m[\nu - 6] \quad \tilde{H}_m[\nu - 2] \quad \ldots \right.$$

$$\left. \tilde{H}_m[\nu + 2] \quad \tilde{H}_m[\nu + 6] \quad \tilde{H}_m[\nu + 4q_b^{(t)} - 2] \right]^T \tag{34}$$

$$\tilde{\mathbf{H}}_m^{(3)}[\nu] = \left[ \tilde{H}_m[\nu - 4q_a^{(t)} + 1] \quad \tilde{H}_m[\nu - 7] \quad \tilde{H}_m[\nu - 3] \quad \ldots \right.$$

$$\left. \tilde{H}_m[\nu + 1] \quad \tilde{H}_m[\nu + 5] \quad \tilde{H}_m[\nu + 4q_b^{(t)} - 3] \right]^T \tag{35}$$

with the length $q^{(t)} = q_a^{(t)} + q_b^{(t)}$, where $q_a^{(t)} \in IN_0$ is the number of considered past LS estimates and $q_b^{(t)} \in IN_0$ the number of considered future LS estimates. Symmetric filters are achieved by choosing $q_a^{(t)} = q_b^{(t)}$ and asymmetric filters by $q_a^{(t)} \neq q_b^{(t)}$. The LS estimate vectors $\tilde{\mathbf{H}}_m^{(l)}[\nu]$ contain the LS estimates of the radio channel contributing to the interpolation result at sub-carrier $m$ and symbol $v$. In other words, $\widetilde{\mathbf{H}}_m^{(i)}[v]$ denotes a filter input vector comprising a plurality of estimates $\tilde{H}_m[\cdot]$ of (reference) samples of a realization of a stochastic process, e.g. a mobile radio channel at sub-carrier $m$.

If smoothing of the LS estimates is desired, the forth and fifth filter vector is $\mathbf{w}_{(t)4}$, $\mathbf{w}_{(t)5}$ of length

$$q_s^{(t)} = q_c^{(t)} + q_d^{(t)} + 1$$ for smoothing at $m \in \mathrm{IP}_{sp}$ and $m \in \mathrm{IP}_{cp}$, respectively. Here again, $q_c^{(t)} \in \mathrm{IN}_0$ is the number of considered past LS estimates $\tilde{H}_m[\cdot]$ and $q_d^{(t)} \in \mathrm{IN}_0$ the number of considered future LS estimates $\tilde{H}_m[\cdot]$ with respect to the sample at time instant v. The corresponding LS estimate or filter input vectors are

$$\bar{\mathbf{H}}_m^{(4)}[v] = \begin{bmatrix} \tilde{H}_m[v - 4q_c^{(t)}] & \tilde{H}_m[v - 4] & \tilde{H}_m[v] & \tilde{H}_m[v + 4] & \tilde{H}_m[v + 4q_d^{(t)}] \end{bmatrix}^T , (36)$$

$$\bar{\mathbf{H}}_m^{(5)}[v] = \begin{bmatrix} \tilde{H}_m[v - q_c^{(t)}] & \tilde{H}_m[v - 1] & \tilde{H}_m[v] & \tilde{H}_m[v + 1] & \tilde{H}_m[v + q_d^{(t)}] \end{bmatrix}^T . (37)$$

I.e., $\widetilde{\mathbf{H}}_m^{(4)}[v]$ and $\widetilde{\mathbf{H}}_m^{(5)}[v]$ denote filter input vectors, each comprising a plurality of estimates $\tilde{H}_m[\cdot]$ of discrete samples of a stochastic process, respectively, e.g. a mobile radio channel at sub-carrier $m$.

One general filter coefficient vector $\mathbf{w}_{(t)i}$ and LS vector $\widetilde{\mathbf{H}}_m^{(i)}[v]$ is considered in the following instead of all five. Thus, the filter operation

$$\hat{H}_m[v] = \mathbf{w}_{(t)i}^H \widetilde{\mathbf{H}}_m^{(i)}[v] \quad \text{with} \quad i = 1 \dots 5, \qquad (38)$$

is applied to all pilot sub-carriers $m \in \mathrm{IP}$ for interpolation and smoothing, where $\hat{H}_m[v]$ denotes a filter output value for the m-th realization of a stochastic process modeling the mobile radio channel at sub-carrier m and time instant v. Each of the plurality of filter output values $\hat{H}_m[v]$ corresponds to an interpolated or smoothed sample of a different realization of the stochastic process and to a specific sampling time instant in between two adjacent LS estimates $\tilde{H}_m[\cdot]$ of the filter input vector $\tilde{H}_m[v]$. Strictly speaking, $i$ is a function of m and $v$, which provides the correct value for $i$ depending on the actual position m and $v$. For the sake of simplicity of the description, however, the index $i$ is dropped in the sequel.

The interpolation and smoothing filter operations of the scattered pilot sub-carriers $m \in \mathrm{IP}_{sp}$ are also applied to $M_{cp}$ continuous pilot sub-carriers $m \in \mathrm{IP}_{cp}$, which is the first step of the algorithm. The second step is comparing the filter outputs $\hat{H}_m[v]$ at $m \in \mathrm{IP}_{cp}$ with corresponding reference data, meaning the LS estimate $\tilde{H}_m[v]$, to determine an estimation error $E_m[v]$ with $m \in \mathrm{IP}_{cp}$. Finally, as third step, the filter coefficient vector update is performed by applying the proposed inventive normalized block processing, which will be referred to as sNBLMS (simplified normalized block least-mean-squares) in the following.

Introducing a matrix-vector notation, a compact description may be deduced. For $m \in \mathrm{IP}_{cp}$: The LS estimate column or filter input vectors $\tilde{H}_m[v]$ form a $q^{(t)} \times M_{cp}$ filter input matrix $\underline{\tilde{H}}[v]$. The filter outputs $\hat{H}_m[v]$ form a $1 \times M_{cp}$ filter output row vector $\hat{\mathbf{H}}[v]$. A $1 \times M_{cp}$ reference row vector $\tilde{\mathbf{H}}[v]$ contains the reference LS estimates $\tilde{H}_m[v]$. Of the same size is the error vector $\mathbf{E}[v]$.

Embodiments of the presents invention, denoted as sNBLMS, adaptively update previous filter coefficients $\mathbf{w}[v]$ of a digital filter based on the following steps:

1. Filtering:

$$\hat{\mathbf{H}}[v] = \mathbf{w}_{(t)}^H \underline{\widetilde{\mathbf{H}}}[v] \qquad (39)$$

2. Determine error:

$$\mathbf{E}[\nu] = \tilde{\mathbf{H}}[\nu] - \hat{\mathbf{H}}[\nu] \tag{40}$$

3. Update:

$$\mathbf{w}_{(t)}[\nu + 1] = \mathbf{w}_{(t)}[\nu] + \frac{\mu}{\|\tilde{\mathbf{H}}[\nu]\|_F^2} \cdot \tilde{\mathbf{H}}[\nu] \cdot \mathbf{E}^H[\nu] \tag{41}$$

The Frobenius matrix norm of a matrix $\underline{\mathbf{A}}$ is defined as $\|\underline{\mathbf{A}}\|_F = \sqrt{\sum_{i,j} |a_{i,j}|^2}$ . As one update is performed per OFDM symbol, the time index $\nu$ denotes also the iteration index of the algorithm. Note, that the inventive sNBLMS update has to be applied to each of the five filter vectors $\mathbf{w}_{(t)i}$.

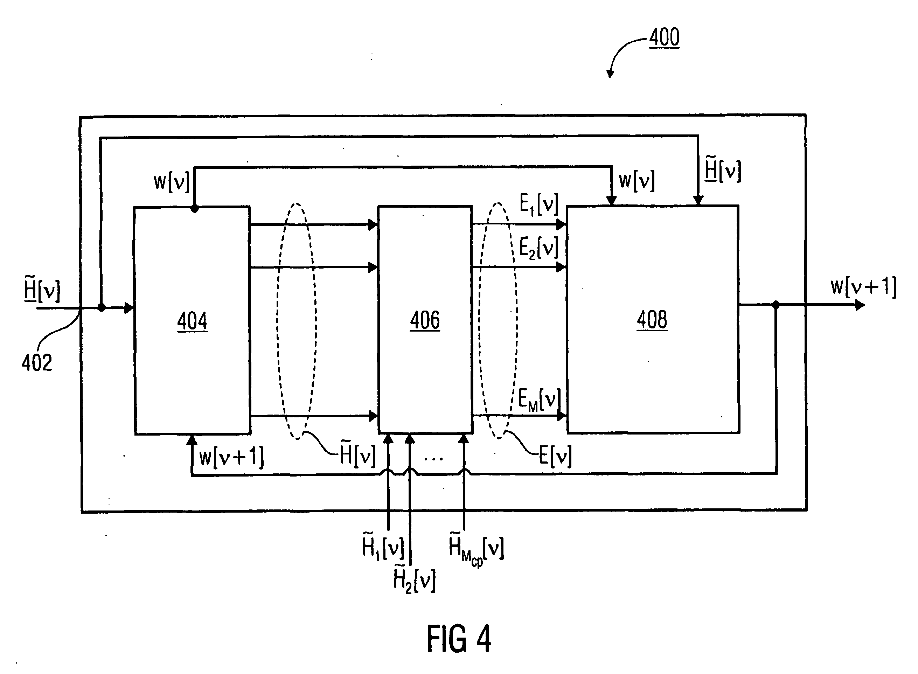

An apparatus 400 for adaptively updating previous filter coefficients $\mathbf{w}[\nu]$ of a digital filter to obtain updated filter coefficients $\mathbf{w}[\nu+1]$ according to an embodiment of the present invention is shown in Fig. 4.

The apparatus 400 comprises an input 402 for receiving a plurality of $M_{cp}$ filter input vectors $\tilde{\mathbf{H}}_m[\nu]$, which may be arranged in a filter input matrix $\underline{\tilde{\mathbf{H}}}[\nu]$. Each of the filter input vectors $\tilde{\mathbf{H}}_m[\nu]$ comprises a plurality of estimates $\tilde{H}_m[\cdot]$ of reference samples of a related realization of a stochastic process, e.g. a mobile fading channel. In the exemplary application of OFDM-channel estimation each of the filter input vectors $\tilde{\mathbf{H}}_m[\nu]$ may comprise LS-estimates $\tilde{H}_m[\cdot]$ of continuous sub-carriers, i.e. $m \in \mathrm{IP}_{cp}$, as it has been explained before with respect to Eqs. (33) to (37). LS-estimates $\tilde{H}_m[\cdot]$ of continuous pilot symbols are also conceivable for interpolating in frequency direction as will be explained further below.

The apparatus 400 further comprises a filter 404 for filtering each of the filter input vectors $\tilde{\mathbf{H}}_m[\nu]$ based on the previous filter coefficients w[v] to obtain a plurality of filter output values $\hat{H}_m[\nu]$, each being related to a different one of the $M_{cp}$ realizations of the stochastic process. Thereby the filter 404 is adapted to perform the filter operation according to Eq. (39). As has been explained before, a plurality of filters 404 may be required in order to obtain filter output values at different interpolation positions in between the available estimates $\tilde{H}_m[\cdot]$ of reference samples, i.e. scattered LS-estimates.

The plurality of filter output values $\hat{H}_m[\nu]$, $m \in \mathrm{IP}_{cp}$, which may be arranged in the vector $\hat{\mathbf{H}}[\nu]$, is fed into an error-processor 406 for determining, for each of the filter output values $\hat{H}_m[\nu]$, $m \in \mathrm{IP}_{cp}$, an error value $E_m[\nu]$ between the filter output value $\hat{H}_m[\nu]$ and a related or corresponding reference sample $\tilde{H}_m[\nu]$ of the corresponding m-th realization of the stochastic process. Thereby the reference sample $\tilde{H}_m[\nu]$ corresponds to the same time/frequency instant, i.e. has the same indices (m,v) as the filter output value $\hat{H}_m[\nu]$. The error values $E_m[\nu]$ may be presented at an output of the error processor 406 in form of the error vector $\mathbf{E}[\nu]$.

The core of the invention is embodied by a coefficient processor 408 for determining the updated filter coefficients $\mathbf{w}[\nu+1]$ based on the previous filter coefficients $\mathbf{w}[\nu]$ and a normalized result derived from a combination of the plurality of filter input vectors $\tilde{\mathbf{H}}_m[\nu]$, which may be arranged in the filter input matrix $\underline{\tilde{\mathbf{H}}}[\nu]$, and the plurality of error values $E_m[\nu]$, which may be arranged in the error vector $\mathbf{E}[\nu]$, wherein the normalization is based on a normalization value derived from the plurality of input vectors $\tilde{\mathbf{H}}_m[\nu]$.

According to embodiments, the normalization value may be based on a matrix norm derived from the plurality of input vectors $\tilde{\mathbf{H}}_m[\nu]$. In a preferred embodiment, the normalization value is the squared Frobenius matrix norm $\left\|\underline{\tilde{\mathbf{H}}}[\nu]\right\|_F^2$ derived from the plurality of input vectors $\tilde{\mathbf{H}}_m[\nu]$ by adding the squared vector norms $\|\tilde{\mathbf{H}}_m[\nu]\|^2$ of the filter input vectors $\tilde{\mathbf{H}}_m[\nu]$ to form $\left\|\underline{\tilde{\mathbf{H}}}[\nu]\right\|_F^2$ . In other words, the coefficient-processor 408 may be adapted to implement the coefficient-update according to Eq. (41), wherein the term according to Eq. (32) may also be expressed according to Eq. (29).

A channel estimator according to an embodiment of the present invention may comprise a plurality of the above-described apparatus 400. Thereby, each of the plurality of the apparatus 400 serves for updating filter coefficients for different interpolation filters and/or smoothing filters $\mathbf{w}_{(t)i}$, as has been explained before. Hence, a filter 404 is adapted to process the filter input vectors such that the plurality of filter output values interpolate or smooth the samples of the filter input vectors based on statistical properties of the different realizations of the stochastic process. In case the different realizations of the stochastic process correspond to mobile fading channels at different sub-carriers, a filter 404 is valid for all sub-carriers since the statistical channel properties, such as e.g. correlation properties, are approximately the same for all sub-carrier-channels since a used bandwidth is negligible in view of a used carrier frequency of a multi-carrier-system.

While the inventive concept has been explained in the foregoing by applying it to perform frequency domain channel estimation for OFDM-systems in time-direction 202, the inventive concept may also be applied for the second stage 204, i.e., interpolation and/or smoothing in frequency direction.

In general, a pre-filtering step is needed prior to the sNBLMS for the interpolation in frequency direction due to the fact that commonly no or too few pilot symbols are provided by the multi-carrier communications system. However, if the channel transfer functions are already fully interpolated by the first stage 202 or by a foreign interpolation algorithm, the pre-filtering may be skipped. In both cases, according to embodiments of the present invention, smoothing in frequency or sub-carrier direction may be performed by the sNBLMS to improve precision of the estimate. The robust pre-filtering step and the smoothing step by the sNBLMS are considered in the following, respectively.

Furthermore, special edge filters are needed to interpolate and/or smooth correctly at the band edges. One may use shortened special edge filters or delay shifted special edge filters opposed to the regular case filters.

If the full channel transfer function is provided to the second stage 204 due to the first stage interpolation on a dense pilot pattern as in Fig. 1b or due to the result of a foreign first stage, no interpolation in sub-carrier direction is needed via pre-filtering. Therefore, the input $\hat{H}_m[v]$ to the second stage is equal to the output of the pre-filtering step:

$$\breve{H}_m[v] = \hat{H}_m[v] \, ,$$

to formally skip this pre-filtering step.

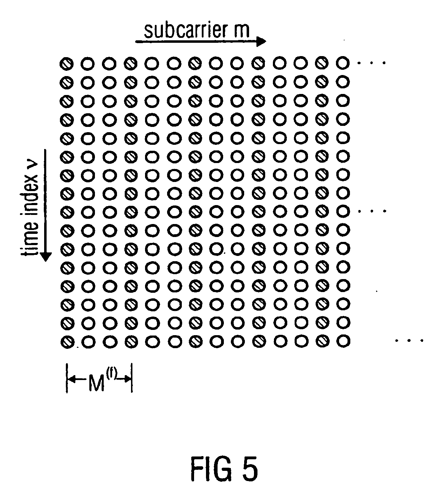

In the other case of a low density pilot pattern after interpolation/smoothing in time direction, only $M_{col} < M$ columns of the whole pattern are filled up with estimates at every $M^{(f)}$-th column, as shown in Fig. 5.

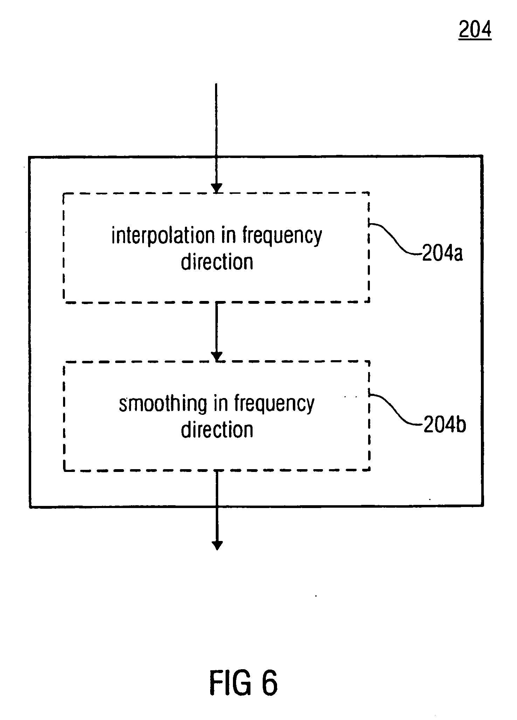

Hence, the second stage 204, i.e., the filtering in frequency direction, may also be divided into sub-stages or sub-steps 204a, 204b, wherein sub-stage 204a denotes an interpolation stage and sub-stage 204b denotes a smoothing stage, see Fig. 6.

Concerning the pre-filtering and in case the channel autocorrelation properties in frequency or sub-carrier direction are unknown, $M^{(f)}-1$ robust filters can be used for interpolation and one for smoothing in the regular region of the pattern. In the considered case of Fig. 5 there are two robust filters $\mathbf{w}_{(r)1}$, $\mathbf{w}_{(r)2}$ for interpolation and one $\mathbf{w}_{(r)3}$ for smoothing. The interpolation filter length is $q^{(r)} = q_a^{(r)} + q_b^{(r)}$ and the smoothing filter length is $q_s^{(r)} = q_c^{(r)} + q_d^{(r)} + 1$.

Non-adaptive robust filters are designed for worst case channel conditions and therefore reduce the dependency on current channel statistics and the implementation effort, see P. Hoeher, S. Kaiser, P. Robertson, Two-dimensional pilot-symbol-aided channel estimation by Wiener filtering. In Proc. ICASSP 1997, IEEE International Conference on Acoustics, Speech, and Signal Processing, volume 3, pages 1845-1848, April 1997 and Y. Li, L.J. Cimini, and N.R. Sollenberger, Robust Channel Estimation for OFDM Systems with Rapid Dispersive Fading Channels. IEEE Trans. Commun., 46:902-915, July 1998. These approaches evaluate the Wiener filter calculation, but replace an unknown power delay profile by a uniform power delay profile.

The corresponding filter input vectors are

$$\hat{\mathbf{H}}_m^{(1)}[v] = [\hat{H}_{m-3q_a^{(r)}+2}[v] \quad \hat{H}_{m-4}[v] \quad \hat{H}_{m-1}[v] \quad \hat{H}_{m+2}[v] \quad \hat{H}_{m+5}[v] \quad \hat{H}_{m+3q_b^{(r)}-1}[v]]^T \quad (42),$$

$$\hat{\mathbf{H}}_m^{(2)}[v] = [\hat{H}_{m-3q_a^{(r)}+1}[v] \quad \hat{H}_{m-5}[v] \quad \hat{H}_{m-2}[v] \quad \hat{H}_{m+1}[v] \quad \hat{H}_{m+3}[v] \quad \hat{H}_{m+3q_b^{(r)}-2}[v]]^T \quad (43)$$

$$\widehat{\mathbf{H}}_m^{(3)}[\nu] = [\widehat{H}_{m-3q_c^{(r)}}[\nu] \quad \widehat{H}_{m-3}[\nu] \quad \widehat{H}_m[\nu] \quad \widehat{H}_{m+3}[\nu] \quad \widehat{H}_{m+3q_d^{(r)}}[\nu] \quad ]^T .$$ (44)

Each filter input vector $\widehat{\mathbf{H}}_m^{(r)}[\nu]$ of Eqs. (42) to (44) with $r = 1, 2, 3$ comprises a plurality of estimates of (reference) samples, wherein each of the samples corresponds to a different realization of the stochastic process modelling the fading channel of sub-carrier $m$. The samples of the filter input vector $\widehat{\mathbf{H}}_m^{(r)}[\nu]$ correspond to the same sampling time instant $\nu$. At each time instant or symbol $\nu$ the different realizations of the stochastic process are correlated in frequency direction essentially in the same way, i.e., the correlation in frequency direction does not change significantly within a symbol interval.

For the sake of simplicity, one general filter coefficient vector $\mathbf{w}_{(r)}$ and vector $\widehat{\mathbf{H}}_m[\nu]$ are considered in the following instead of all three, respectively. Thus, the filter operation

$$\breve{H}_m[\nu] = \mathbf{w}_{(r)}^H \widehat{\mathbf{H}}[\nu]$$ (45)

is applied to all sub-carriers m for interpolation or smoothing, except of the band edge regions, where special case robust filters have to be used. The filter coefficients may be calculated by

$$\mathbf{w}_{(r)} = \underline{\mathbf{\Phi}}'^{-1} \boldsymbol{\varphi}'$$ (46)

with the robust ACM $\underline{\mathbf{\Phi}}' = \underline{\mathbf{\Phi}}'_c + \sigma_n'^2 \cdot \underline{\mathbf{I}}$ and robust CCV $\varphi$. The robust ACM and CCV differ from the true ACM and CCV defined in Eq. (6) and Eq. (7), respectively, by using the autocorrelation function

$$\varphi_c'[\Delta m] = \frac{\sin(\pi \cdot \tau_{\max}' \cdot \delta f \cdot \Delta m)}{\pi \cdot \tau_{\max}' \cdot \delta f \cdot \Delta m}$$ (47)

instead of the true channel autocorrelation function, see P. Hoeher, S. Kaiser, P. Robertson, Two-dimensional pilot-symbol-aided channel estimation by Wiener filtering. In Proc. ICASSP 1997, IEEE International Conference on Acoustics, Speech, and Signal Processing, volume 3, pages 1845-1848, April 1997 and Y. Li, L.J. Cimini, and N.R. Sollenberger, Robust Channel Estimation for OFDM Systems with Rapid Dispersive Fading Channels. IEEE Trans. Commun., 46: 902-915, July 1998 and G. Auer. Efficient Implementation of Robust OFDM Channel Estimation, in Proc. PIMRC 2005, 16th Int. Symposium on Personal, Indoor and Mobile Radio Communications, 2005. The robustness is parameterizable by choosing a worst-case channel delay $\tau'_{max}$ in seconds and a worst-case noise variance $\sigma_n'^2$. One can calculate all filter vectors $\mathbf{w}_{(r)}$ according to Eq. (46) in advance and store them in the receiver.

It shall be emphasized that the inventive sNBLMS may also be used in step 204a for adaptive filtering instead of the robust filtering described before. However, in this case rows with only pilot cell positions, i.e., continuous pilot symbols, would be required in order to perfom the coefficent update based on the continuous pilot symbols, similar as it has been described before with respect to the interpolation filter operations of the continuous pilot subcarriers $m \in \text{IP}_{cp}$.

At the latest after the pre-filtering step 204a described before, the estimated channel transfer function is fully interpolated. To improve the precision of the individual estimates, the inventive sNBLMS is applied for smoothing, 204b. A filter input vector of length $q^{(f)} = q_c^{(f)} + q_d^{(f)} + 1$ comprising a plurality of estimates of (reference) samples, each of a different realization (sub-carrier m) of the stochastic process, may be formed by

$$\mathbf{\breve{H}}_{m}[\nu] = \begin{bmatrix} \breve{H}_{m-3\cdot q_c^{(f)}}[\nu] & \breve{H}_{m-3}[\nu] & \breve{H}_m[\nu] & \breve{H}_{m+3}[\nu] & \breve{H}_{m+3\cdot q_d^{(f)}}[\nu] \end{bmatrix}^T . \quad (48)$$

The filter operation

$$\hat{H}_m[\nu] = \mathbf{w}_{(f)}^H[\nu]\mathbf{\breve{H}}_m[\nu] \quad (49)$$

is applied to all sub-carriers m for smoothing interpolated channel coefficients in order to obtain smoothed channel coefficients $\hat{H}_m[\nu]$, except of the band edge regions, where special case filters have to be used which may be calculated via the inventive sNBLMS concept as well. Each of the plurality of filter output values $\hat{H}_m[\nu]$ corresponds to a different realization of a stochastic process (radio channel) at a specific sub-carrier frequency.

For updating in frequency direction, an iteration index η may be used instead of subcarrier-index m as at the band end one has to switch to the next OFDM symbol. In this case there are two possible directions of adaptation: either one keeps the same direction, e.g. again from lower to higher frequencies, or one switches the direction at each OFDM symbol using the duality of forward- and backward-prediction, e.g. from higher to lower frequencies and in the following OFDM symbol from lower to higher frequencies and so forth. In analogy to the filtering in time direction, now filtering and updating is performed in frequency direction. Thus, to formulate the sNBLMS algorithm, $M_{up}$ vectors

$$\mathbf{\breve{H}}_m[\nu]$$

of the same continuous pilot subcarrier $m \in$ IP$_{cp}$ but of different OFDM symbols v form a $q^{(f)} \times M_{up}$ filter input matrix

$$\underline{\mathbf{\breve{H}}}_m[\nu] .$$

Hence, $M_{up}$ denotes the number of used vectors or OFDM symbols for block processing. A symmetric example of $M_{up}$ = 5 w.r.t.. to the considered amount of future and past OFDM symbols is

$$\underline{\mathbf{\breve{H}}}_m[\nu] = \begin{bmatrix} \mathbf{\breve{H}}_m[\nu-2] & \mathbf{\breve{H}}_m[\nu-1] & \mathbf{\breve{H}}_m[\nu] & \mathbf{\breve{H}}_m[\nu+1] & \mathbf{\breve{H}}_m[\nu+2] \end{bmatrix} . \quad (50)$$

Here, the plurality of reference samples of a particular filter input vector

$$\mathbf{\breve{H}}_m[\cdot]$$

(see Eq. 48) stem from a plurality of realizations of the stochastic process, i.e. from a plurality of sub-carriers, taken at a certain time-instant (v-2), (v-1), v, (v+1) or (v+2) respectively. However, the filter input vectors

$$\mathbf{\breve{H}}_m[\cdot]$$

can also be considered as vectors, wherein each filter input vector

$$\mathbf{\breve{H}}_m[\cdot]$$

corresponds to a different realization of a stochastic process, and wherein each realization corresponds to the mobile radio channel in frequency direction at certain time-instants (v-2), (v-1), v, (v+1) or (v+2). From time-instant (OFDM-symbol) (v-2) to time-instant (v+2) the statistical properties of the different realizations, such as the autocorrelation function of the mobile radio channel in frequency direction, may be assumed to be identical.

The restriction of only using continuous pilot subcarriers m $\in$ IP$_{cp}$ for an update is based on the fact, that the original LS estimates $\tilde{H}_m[v]$ of these subcarriers are used as reference data in Eq. (52) below. As a theoretically suboptimal alternative, one may also use $\hat{H}_m[v]$ as reference data. Therefore, the index range for m can be expanded to include all columns of Fig. 5. $M_{up} < M$ grows in the same way as the index range is expanded. This method can be used at the risk of having a colored, i.e. non-white, noise component in the reference data - especially, if the first channel interpolation stage 202 is no MMSE-performance approaching algorithm or has not yet finished converging. This means, that the sNBLMS convergence characteristic of the second stage 204 is directly related to previous stage 202, which is in general not favorable.

As an alternative, one may form the filter input matrix

$$\check{\underline{\mathbf{H}}}_m[v]$$

by data from different subcarriers using scattered pilot and continuous pilot cells, which originally contained non-zero LS estimates $\tilde{H}_m[v]$, as reference as well, but possible cross-correlation between time and frequency direction may disturb the algorithm.

However, in both cases of reference data the number of possible updates per OFDM symbol is smaller than the amount of continuous sub-carriers $M_{cp}$ or continuous plus scattered sub-carriers $M_{col}$, respectively, because at the band edges the special filters have to be applied instead of the regular case filters. The reference data of the first case may contain a greater noise component than that of the second case, but the inventive sNBLMS algorithm will be disturbed the less the higher $M_{up}$ is for noise averaging. This has to be taken into account only if one has to use small values of $M_{up}$, e.g. for reasons of complexity reduction.

Finally, smoothing in frequency direction by means of the inventive sNBLMS algorithm in matrix-vector notation comprises, according to an embodiment of the present invention,

    1. Filtering:

$$\hat{\mathbf{H}}_m[v] = \mathbf{w}_{(f)}^H[\eta]\check{\underline{\mathbf{H}}}_m[v] \qquad\qquad (51)$$

    2. Determine error:

$$\mathbf{E}_m[v] = \hat{\mathbf{H}}_m[v] - \mathbf{\hat{H}}_m[v] \qquad\qquad (52)$$

    3. Update:

$$\mathbf{w}_{(f)}[\eta+1] = \mathbf{w}_{(f)}[\eta] + \frac{\mu}{\|\check{\underline{\mathbf{H}}}_m[v]\|_F^2} \cdot \check{\underline{\mathbf{H}}}_m[v] \cdot \mathbf{E}_m^H[v] \qquad\qquad (53)$$

The filter output values vector $\hat{\mathbf{H}}_m[v]$, the error vector $\mathbf{E}_m[v]$ and the reference data vector $\tilde{H}_m[v]$ are of size $1 \times M_{up}$. As several updates are performed per OFDM symbol, the index denotes the iteration index of the algorithm, only. Note, that the filtering operation of Eq. (51) is already included in the application of Eq. (49), but it is shown here for completeness of the inventive sNBLMS algorithm.

The apparatus 400 of Fig. 4 can also be used for implementing the smoothing filter update according to Eqs. (51) to (53) if

$$\breve{\mathbf{H}}_m[\nu]$$

are used as filter input vectors, resulting in the filter input matrix

$$\underline{\breve{\mathbf{H}}}_m[\nu] \; .$$

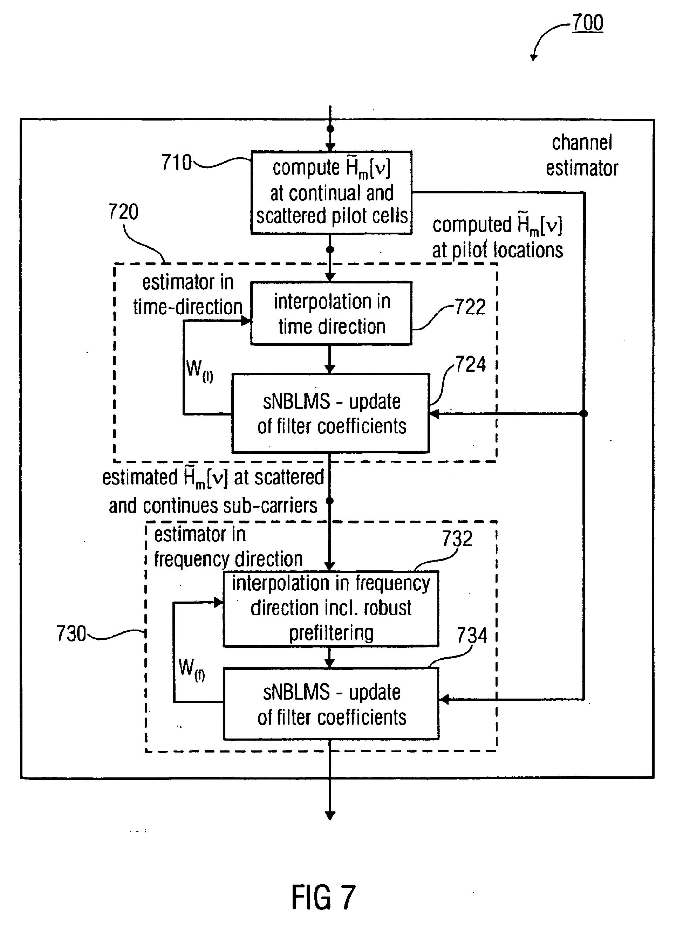

To summarize, Fig. 7 shows a channel estimator 700 in accordance with an embodiment of the present invention, including time-direction and frequency-direction interpolation, i.e. stages 202 and 204.

The channel estimator 700 includes blocks 710, 720 and 730. Block 710 computes the LS estimates $\tilde{H}_m[\nu]$ of the channel transfer functions at the pilot positions $(m,\nu) \in$ IP, including the continuous pilot positions $(m,\nu) \in$ IP$_{cp}$ and scattered pilot positions $(m,\nu) \in$ IP$_{sp}$.

A time-direction interpolator 720 includes blocks 722 and 724. In block 722, the channel transfer functions are calculated using time-direction interpolation at non-pilot positions at the scattered pilot sub-carriers 104. Block 724 computes the time-direction interpolator coefficient updates based on the inventive concept, i.e., block 722 may comprise an apparatus 400 for adaptively updating filter coefficients according to the sNBLMS-algorithm. The updated time-direction filter coefficients are then again fed back to block 722 for time-direction interpolation. After time-direction interpolation, the estimates via time-direction interpolation or computed values of the channel transfer functions at all the scattered pilot sub-carriers 104 are available, as shown in Fig. 5.

A frequency-direction interpolator 730 computes channel transfer function estimates at all non-pilot sub-carriers. Block 730 includes blocks 732 and 734. In block 732, the channel transfer functions are calculated using frequency-direction interpolation 204a and/or smoothing 204b at all the non-pilot sub-carriers. Block 734 may compute frequency-direction interpolator coefficient updates based on the inventive sNBLMS algorithm. The updated frequency-direction filter coefficients are then again fed back to block 722 for frequency-direction interpolation and/or smoothing. After frequency-direction interpolation/ smoothing, the estimates of all the transfer functions at all sub-carriers are available either through frequency-direction interpolation for all the non-pilot sub-carriers and/ or the time-direction interpolation for the non-pilot positions for the scattered pilot sub-carriers.

Finally, the convergence behavior of inventive sNBLMS update concept is compared to the optimal NBLMS and the non-block NLMS in terms of the mean squared estimation error. These considerations base on computer simulation results.

The OFDM system parameters are based on the DVB-T/H/SH standard and specified in table A.1.

Table A.1: Condidered OFDM system parameters

| DFT size | $M$ | 2048 |
|---|---|---|
| Non-zero subcarriers | $M_u$ ($M_{cp}$) | 1705 (45) |
| OFDM symbol length. | T [μs] | 448 |
| Guard interval length | $T_{GI}$ [μs] | 89.60 |
| (Used) Bandwidth | $B$ ($B_u$) [MHz] | 5.0 (4.757) |
| Subcarrier spacing | $\delta f$ [kHz] | 2.79 |

To avoid the fast fluctuating characteristic of a learning curve caused by averaging directly over the squared estimation error $|H_m[\nu]-\hat{H}_m[\nu]|^2$, the actual filter coefficient vectors $\mathbf{w}[\nu]$ are inserted in the cost function of Eq. (5) respectively Eq. (19). Afterwards, an ensemble average over 200 runs is calculated, whose result is denoted as $\bar{J}[\nu]$. First, a step sizes $\mu = 0.1$ is used to limit the excess error, while later on, $\mu = 0.4$ is selected to discuss potential drawbacks of a convergence speed increase.

Additionally, all figures show the minimum mean-squared estimation error $J_{min}$ (dashed horizontal lines) w.r.t. the considered channel properties and the example of table A.1.

For the purpose of time reference, the vertical line in each figure denotes the end of the first OFDM frame consisting of 68 OFDM symbols.

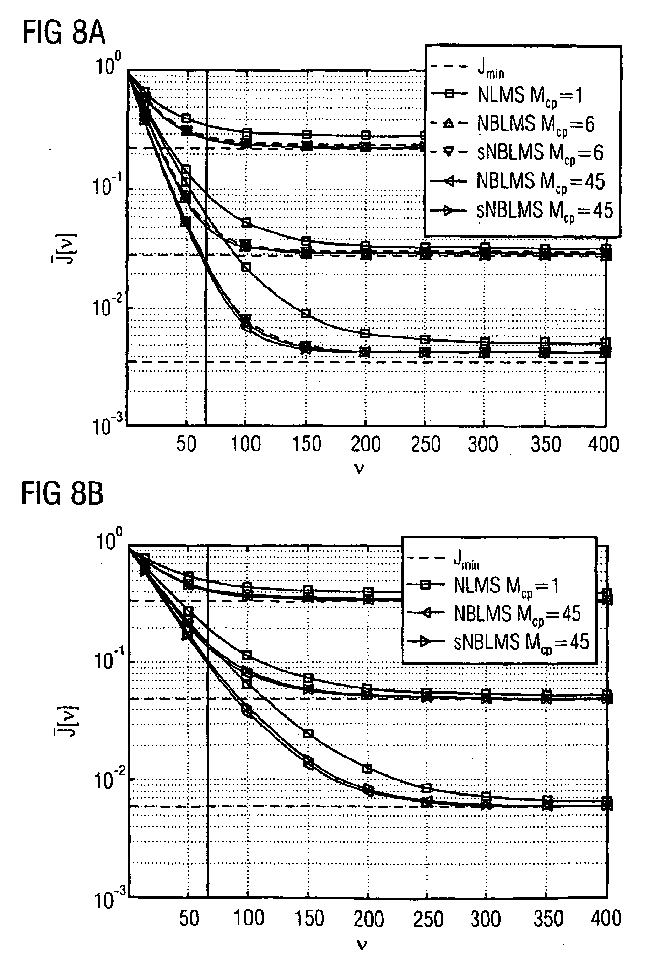

Figs. 8a-d are related to the first stage 202, i.e. the estimation in time direction. The used interpolation filter length corresponds to $q^{(t)} = q_a^{(t)} + q_b^{(t)} = 6$ . As an example, interpolation position according to Eq. (34) was chosen for simulation.

In Fig. 8a the convergence behavior of the different algorithms is shown for a maximum Doppler frequency $f_{D,max} = 100$ Hz and three carrier-to-noise ratios $C/N = 0$, 10, and 20 dB for the upper, middle and lower group of curves,

# EP 2 285 053 B1

respectively. In general for all *C/N*, a faster convergence of the block algorithms compared to the non-block NLMS algorithm can be observed. In particular, two impacts responsible for a block processing gain may be distinguished: noise averaging and a more precise approximation of the expectation operator.

The block processing of NBLMS and the inventive sNBLMS decreases the excess error compared to the NLMS. The inventive simplified algorithm (sNBLMS) reaches the same excess error level as its non-simplified counterpart, which holds for all three considered *C/N* values.

Regarding the convergence speed, the inventive sNBLMS algorithm converges very close to the NBLMS. No evident degradation due to the suboptimality of the sNBLMS is observable.

Furthermore, two different numbers of continuous pilot subcarriers $M_{cp}$ =6 (dashed lines) and $M_{cp}$ =45 (solid lines) for block processing are compared. Only a slight degradation of the convergence speed is noticeable due to the reduction of complexity by using only $M_{cp}$ =6. The choice $M_{cp}$ =45 is the maximum value according to the parameters in Tab. A.1.

Comparing Fig. 8a to Fig. 8b, which shows the convergence behavior for $f_{D,max}$ = 200 Hz, an initial convergence speed degradation of the NLMS-type algorithms is noticeable due the changed channel conditions, but on the other hand the excess error decreases. Also for $f_{D,max}$ = 200 Hz, the inventive sNBLMS converges very close the NBLMS.

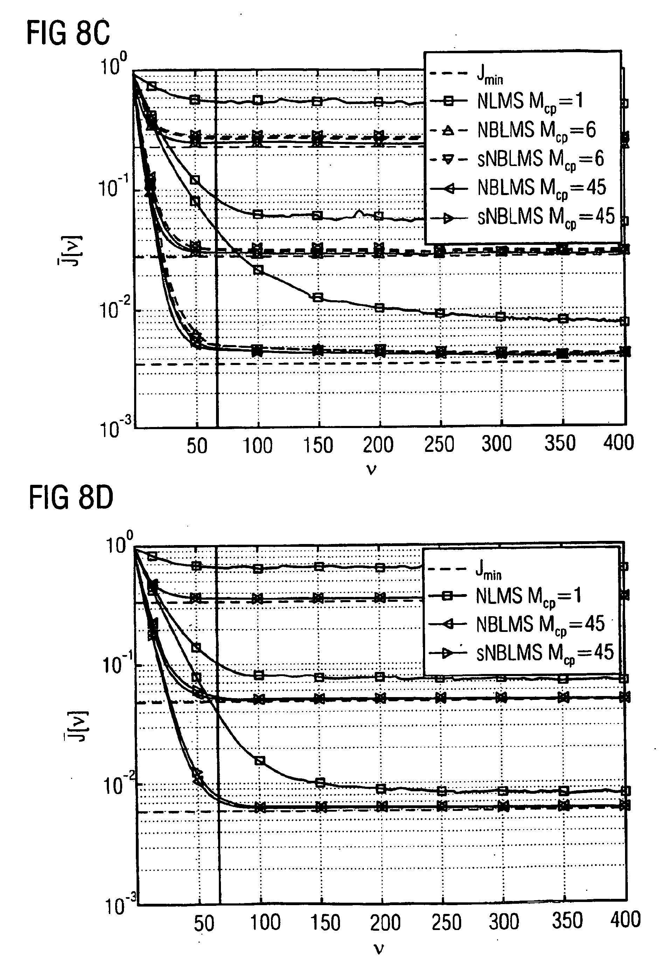

To accelerate the convergences = 0.9 is chosen in Fig. 8c and Fig. 8d for $f_{D,max}$ = 100 Hz and 200 Hz, respectively. The NLMS learning curve suffers significantly from this higher step size, whereas NBLMS and inventive sNBLMS show an improved convergence speed at the expense of a slightly increased excess error compared to the case $\mu$ = 0.1. A satisfying convergence within the first OFDM frame for NBLMS and inventive sNBLMS can be stated in case of the full block size $M_{cp}$ =45 as well as for the reduced block size $M_{cp}$ = 6. Again, only marginal performance differences between the NBLMS and the inventive sNBLMS algorithm are observable. Finally, these results show that one may use $\mu$ = 0.4 initially and switch e.g. after the first OFDM frame to a lower step size value to combine the advantages of both settings.

Embodiments of the present invention, due to the normalization of the LMS algorithm, improved the convergence characteristic in terms of convergence speed and robustness against channel statistic changes. This is combined with a high robustness against low SNRs by the block processing property. Furthermore, the problem of possible numerical instability is significantly decreased by the sNBLMS according to embodiments of the present invention - opposed to a conventional NBLMS according to Eqs. (22) to (24).

If one compares Eq. (24) with Eq. (41), the second advantage of the inventive sNBLMS is observable: the amount of necessary divisions is reduced by a factor of $M_{cp}$ for the adaption in time direction. For the adaption in frequency direction the factor is $M_{up}$. However, simultaneously to the complexity reduction, nearly the whole block processing and normalizing gain is kept due to the inventive normalization.

The proposed concept provides a useful scalability of the complexity. To reduce complexity one may adapt the filter lengths and the number of update calculation events. The latter case means that the index increment in the update term in Eq. (41) and Eq. (52) may be greater than 1. The maximum update rate would be performing the updates at every symbol v. Furthermore, the numbers of considered subcarriers for block processing ($M_{cp}$ and $M_{up}$) may be reduced. Thus, the inventive concept provides an exchange between complexity and precision of the estimate, depending on the individual requirements.

Depending on the circumstances, the inventive concept for adaptively updating filter coefficients may be implemented in hardware or in software. The implementation may be done on a digital storage medium, particularly a disc, a DVD or a CD with electronically readable control signals, which may cooperate with a programmable computer system such that the method is executed. In general, the invention also consists in a computer program product with a program code stored on a machine-readable carrier for performing the inventive method when the computer program product runs on a computer and/or microcontroller. In other words, the invention may, thus, be realized as a computer program with a program code for performing the method for adaptively updating filter coefficients when the computer program runs on a computer and/or microcontroller.

## Claims

1. Apparatus (400) for adaptively updating previous filter coefficients (**w**[v]) of a digital filter to obtain updated filter coefficients (**w**[v+1]), the apparatus comprising:

    an input (402) configured to receive a plurality of filter input vectors ($\tilde{\mathbf{H}}_m[v]$ ;

$$\check{\mathbf{H}}_m[v] )\ ,$$

each comprising reference samples of a plurality of realizations of a stochastic process;
a filter (404) configured to filter each of the filter input vectors ($\tilde{\mathbf{H}}_m[v]$;

$$\check{\mathbf{H}}_m[v]$$

) based on the previous filter coefficients ($\mathbf{w}[v]$) to obtain a plurality of filter output values ($\hat{H}_m[v]$; $\hat{H}_m[v]$), each related to a different realization of the stochastic process;
an error-processor (406) configured to determine, for each of the filter output values, an error value ($E_m[v]$) between the filter output value ($\tilde{H}_m[v]$; $\hat{H}_m[v]$) and a corresponding reference sample of a corresponding realization of the stochastic process; and
a coefficient-processor (408) configured to determine the updated filter coefficients ($\mathbf{w}[v+1]$) based on the previous filter coefficients ($\mathbf{w}[v]$);
**characterized in that**
the coefficient-processor (408) is configured to determine the updated filter coefficients ($\mathbf{w}[v+1]$) in accordance with the following equation:

$$\mathbf{w}[v+1] = \mathbf{w}[v] + \frac{\mu}{\sum_{m \in IP_{cp}} \left\| \tilde{\mathbf{H}}_m[v] \right\|^2} \cdot \sum_{m \in IP_{cp}} \tilde{\mathbf{H}}_m[v] \cdot E_m^{\bullet}[v]$$

wherein:

$\mathbf{w}[v+1]$ is an updated filter coefficient vector,
$\mathbf{w}[v]$ is a previous filter coefficient vector,
$\mu$ is a stepsize factor,
$\tilde{\mathbf{H}}_m[v]$ is a filter input vector, and
$E_m^*[v]$ is the complex conjugate of the error value.

2. Apparatus according to claim 1, wherein
a filter input matrix ($\underline{\tilde{\mathbf{H}}}[v]$; $\overline{\mathbf{H}}[v]$) is formed by the plurality of filter input vectors ($\tilde{\mathbf{H}}_m[v]$; $\overline{\mathbf{H}}_m[v]$) as columns of the filter input matrix and an error vector ($\mathbf{E}^H[v]$) is formed by the plurality of error values ($E_m[v]$), and
the coefficient-processor (408) is configured to determine the updated filter coefficients ($\mathbf{w}[v+1]$) in accordance with the following equation:

$$\mathbf{w}[v+1] = \mathbf{w}[v] + \frac{\mu}{\left\| \underline{\tilde{\mathbf{H}}}[v] \right\|_F^2} \cdot \underline{\tilde{\mathbf{H}}}[v] \cdot E^H[v]$$

wherein:

$\mathbf{w}[v+1]$ is an updated filter coefficient vector,
$\mathbf{w}[v]$ is a previous filter coefficient vector,
$\mu$ is a stepsize factor,
$\underline{\mathbf{H}}[v]$ is the hermitian filter input matrix formed by the plurality of filter input vectors, is the squared Frobenius matrix norm of the filter input matrix, and
$\mathbf{E}^H[\mathbf{v}]$ is the error vector formed by the plurality of error values.

3. Apparatus according to claim 1 or 2, wherein each of the plurality of filter output values ($\hat{H}_m[v]$) corresponds to an interpolated sample of a different realization of a stochastic process corresponding to a specific sampling instant in between two adjacent sampling instants (m; $v$) of the reference samples of the filter input vectors ($H_m[v]$;$\overline{H}_m[v]$).

4. Apparatus according to one of claims 1 to 3, wherein each filter input vector ($\overline{H}_m[v]$) comprises a plurality of reference samples, wherein each of the reference samples corresponds to a different realization of a stochastic process, the different realizations having essentially the same statistical properties, and wherein the reference samples correspond to the same time instant (v).

5. Apparatus according to claim 4, wherein each of the plurality of filter output values ($\overset{\wedge}{H}_m[v]$) corresponds to a different realization of a stochastic process at a specific frequency in between two adjacent frequencies corresponding to adjacent realizations of the stochastic process of the reference samples of the filter input vector ($\overline{H}_m[v]$).

6. Apparatus according to one of the preceding claims, wherein the filter (404) is configured to process the filter input vectors ($\tilde{\mathbf{H}}_m[v]; \overline{H}_m[v]$), such that a noise level of the plurality of reference samples of the plurality of realizations of the stochastic process is reduced.

7. Apparatus according to one of the preceding claims, wherein each of the plurality of filter input vectors ($\tilde{\mathbf{H}}_m[v]$) comprises a plurality of estimates of reference samples of a mobile radio channel, wherein each of the mobile radio channels corresponds to a sub-carrier of a multi-carrier communication system, and wherein the estimates correspond to pilot symbol positions within a sub-carrier, respectively.

8. Apparatus according to one of the preceding claims, wherein each of the plurality of filter input vectors ($\overline{H}_m[v]$) comprises estimates of reference samples of different mobile radio channels, wherein each of the mobile radio channels corresponds to a sub-carrier of a multi-carrier communication system, and wherein the estimates correspond to pilot symbol positions at a time instant (v), respectively.

9. Apparatus according to claim 7 or 8, wherein the filter output values $\overline{H}_m[v]$ are interpolated channel coefficient estimates interpolating the mobile radio channel estimates in between pilot symbol positions.

10. Mobile channel estimator (700) for estimating a plurality of mobile radio channels at non-pilot positions, wherein each of the mobile radio channels corresponds to a sub-carrier of a multi-carrier communication system, the mobile channel estimator comprising an apparatus (400) according to one of the preceding claims, each of plurality of filter input vectors ($\tilde{\mathbf{H}}_m[v]$;

$$\check{\mathbf{H}}_m[v]$$

) comprises a plurality of pilot-based channel-estimates of the plurality mobile radio channels.

11. Method for adaptively updating previous filter coefficients ($\mathbf{w}[v]$) of a digital filter to obtain updated filter coefficients ($\mathbf{w}[v+1]$), the method comprising:

receiving a plurality of filter input vectors ($\tilde{\mathbf{H}}_m[v]$ ;

$$\check{\mathbf{H}}_m[v]$$

), each comprising reference samples of a plurality of realizations of a stochastic process;
filtering each of the filter input vectors ($\tilde{\mathbf{H}}_m[v]$ ;

$$\check{\mathbf{H}}_m[v]$$

) based on the previous filter coefficients ($\mathbf{w}[v]$) to obtain a plurality of filter output values ($\overset{\wedge}{H}_m[v]$ ; $\overset{\wedge}{H}_m[v]$), each related to a different realization of the stochastic process;
determining, for each of the filter output values ($\overset{\wedge}{H}_m[v]$ ; $\overset{\wedge}{H}_m[v]$), an error value ($E_m[v]$) between the filter output value and a corresponding reference sample of a corresponding realization of the stochastic process; and
determining the updated filter coefficients ($\mathbf{w}[v+]$) based on the previous filter coefficients ($\mathbf{w}[v]$);
**characterized in that**
the updated filter coefficients ($\mathbf{w}[v+1]$) are determined in accordance with the following equation:

$$\mathbf{w}[v+1] = \mathbf{w}[v] + \frac{\mu}{\sum\limits_{m\in\mathbb{P}_{cp}}\left\|\tilde{\mathbf{H}}_{m}[v]\right\|^{2}} \cdot \sum\limits_{m\in\mathbb{P}_{cp}}\tilde{\mathbf{H}}_{m}[v]\cdot E_{m}^{\bullet}[v]$$

wherein:

$\mathbf{w}[v+1]$ is an updated filter coefficient vector,
$\mathbf{w}[v]$ is a previous filter coefficient vector,
$\mu$ is a stepsize factor,
$\mathbf{H}_{m}[v]$ is a filter input vector, and
$E_{m}^{*}[v]$ is the complex conjugate of the error value.

12. Method according to claim 11, wherein
a filter input matrix ($\underline{\tilde{\mathbf{H}}}[v]$;

$$\underline{\check{\mathbf{H}}}[v]$$

) is formed by the plurality of filter input vectors ($\tilde{\mathbf{H}}_{m}[v]$;

$$\check{\mathbf{H}}_{m}[v]$$

) as columns of the filter input matrix and an error vector ($\mathbf{E}^{H}[v]$) is formed by the plurality of error values ($E_{m}[v]$), and the updated filter coefficients ($\mathbf{w}[v+1]$) are determined in accordance with the following equation:

$$\mathbf{w}[v+1] = \mathbf{w}[v] + \frac{\mu}{\left\|\underline{\tilde{\mathbf{H}}}[v]\right\|_{F}^{2}} \cdot \underline{\tilde{\mathbf{H}}}[v]\cdot E^{H}[v]$$

wherein:

$\mathbf{w}[v+1]$ is an updated filter coefficient vector,
$\mathbf{w}[v]$ is a previous filter coefficient vector,
$\mu$ is a stepsize factor,
$\underline{\mathbf{H}}[v]$ is the filter input matrix formed by the plurality of filter input vectors,
 is the squared Frobenius matrix norm of the filter input matrix, and
$E^{H}[v]$ is the hermitian error vector formed by the plurality of error values.

13. Computer-program for performing the steps of the method according claim 11 or 12, when the computer-program is executed on a computer or micro-controller.


**Patentansprüche**

1. Vorrichtung (400) zum adaptiven Aktualisieren von vorangehenden Filterkoeffizienten (w[v]) eines digitalen Filters, um aktualisierte Filterkoeffizienten ($\mathbf{w}[v+1]$) zu erhalten, wobei die Vorrichtung folgende Merkmale aufweist:

einen Eingang (402), der konfiguriert ist, um eine Mehrzahl von Filtereingangsvektoren ($\tilde{\mathbf{H}}_{m}[v]$ ;

$$\check{\mathbf{H}}_{m}[v]$$

) zu empfangen, wobei jeder derselben Referenzabtastwerte einer Mehrzahl von Realisierungen eines stochastischen Prozesses aufweist;

ein Filter (404), das konfiguriert ist, um jeden der Filtereingangsvektoren ($\tilde{\mathbf{H}}_m[v]$;

$$\check{\mathbf{H}}_m[\nu]$$

) basierend auf den vorhergehenden Filterkoeffizienten (w[v]) zu filtern, um eine Mehrzahl von Filterausgangswerten ($\tilde{H}_m[v]$ ; $\hat{H}_m[v]$) zu erhalten, die sich jeweils auf eine unterschiedliche Realisierung des stochastischen Prozesses beziehen;

einen Fehlerprozessor (406), der konfiguriert ist, um für jeden der Filterausgangswerte einen Fehlerwert ($E_m[v]$) zwischen dem Filterausgangswert ($\tilde{H}_m[v]$ ; $\hat{H}_m[v]$) und einem entsprechenden Referenzabtastwert einer entsprechenden Realisierung des stochastischen Prozesses zu bestimmen; und

einen Koeffizientenprozessor (408), der konfiguriert ist, um die aktualisierten Filterkoeffizienten (**w**[v+1]) basierend auf den vorangehenden Filterkoeffizienten (w[v]) zu bestimmen;

**dadurch gekennzeichnet, dass**

der Koeffizientenprozessor (408) konfiguriert ist, um die aktualisierten Filterkoeffizienten (**w**[v+1]) gemäß der folgenden Gleichung zu bestimmen:

$$\mathbf{w}[\nu+1] = \mathbf{w}[\nu] + \frac{\mu}{\sum\limits_{m \in IP_{cp}} \left\| \tilde{\mathbf{H}}_m[\nu] \right\|^2} \cdot \sum\limits_{m \in IP_{cp}} \tilde{\mathbf{H}}_m[\nu] \cdot E_m^*[\nu]$$

wobei

**w**[$v$+1] ein aktualisierter Filterkoeffizientenvektor ist,

**w**[$v$] ein vorangehender Filterkoeffizientenvektor ist,

$\mu$ ein Schrittgrößenfaktor ist,

$\tilde{\mathbf{H}}_m[v]$ ein Filtereingangsvektor ist, und

$E_m^*[v]$ die konjugiert Komplexe des Fehlerwerts ist.

2. Vorrichtung gemäß Anspruch 1, bei der
eine Filtereingangsmatrix ($\underline{\tilde{\mathbf{H}}}[v]$ ;

$$\underline{\check{\mathbf{H}}}[\nu]$$

) durch die Mehrzahl der Filtereingangsvektoren ($\tilde{\mathbf{H}}_m[v]$ ;

$$\check{\mathbf{H}}_m[\nu]$$

) als Spalten der Filtereingangsmatrix gebildet ist und ein Fehlervektor ($\mathbf{E}^H[v]$) durch die Mehrzahl der Fehlerwerte ($E_m[v]$) gebildet ist, und

der Koeffizientenprozessor (408) konfiguriert ist zum Bestimmen der aktualisierten Filterkoeffizienten (**w**[$v$+1]) gemäß der folgenden Gleichung:

$$\mathbf{w}[\nu+1] = \mathbf{w}[\nu] + \frac{\mu}{\left\| \underline{\tilde{\mathbf{H}}}[\nu] \right\|_F^2} \cdot \underline{\tilde{\mathbf{H}}}[\nu] \cdot E^H[\nu]$$

wobei:

**w**[v+1] ein aktualisierter Filterkoeffizientenvektor ist,

w[v] ein vorangehender Filterkoeffizientenvektor ist,

$\mu$ ein Schrittgrößenfaktor ist,

$\underline{\mathbf{H}}$[v] die Hermetian-Filtereingangsmatrix ist, gebildet durch die Mehrzahl von Filtereingangsvektoren,

die Quadrat-Frobenius-Matrixnorm der Filtereingangsmatrix ist, und

$\mathbf{E}^{H}$[v] der Fehlervektor ist, gebildet durch die Mehrzahl von Fehlerwerten.

3. Vorrichtung gemäß Anspruch 1 oder 2, bei der jeder der Mehrzahl der Filterausgangswerte ($\hat{H}_{m}$[v]) einem interpolierten Abtastwert einer unterschiedlichen Realisierung eines stochastischen Prozesses entspricht, entsprechend einem spezifischen Abtastmoment zwischen zwei benachbarten Abtastmomenten (m; v) der Referenzabtastwerte der Filtereingangsvektoren ($\tilde{\mathbf{H}}_{m}$[v];

$$\breve{\mathbf{H}}_{m}[\nu]$$

).

4. Vorrichtung gemäß einem der Ansprüche 1 bis 3, bei der jeder Filtereingangsvektor ($\overline{\mathbf{H}}_{m}$[v]) eine Mehrzahl von Referenzabtastwerten aufweist, wobei jeder der Referenzabtästwerte einer unterschiedlichen Realisierung eines stochastischen Prozesses entspricht, wobei die unterschiedlichen Realisierungen im Wesentlichen dieselben statistischen Eigenschaften aufweisen, und wobei die Referenzabtastwerte demselben Zeitmoment (v) entsprechen.

5. Vorrichtung gemäß Anspruch 4, bei der jeder der Mehrzahl der Filterausgangswerte ($\hat{H}_{m}$[v]) einer unterschiedlichen Realisierung eines stochastischen Prozesses bei einer spezifischen Frequenz zwischen zwei benachbarten Frequenzen entspricht, entsprechend benachbarten Realisierungen des stochastischen Prozesses der Referenzabtastwerte des Filtereingangsvektors ($\overline{\mathbf{H}}_{m}$[v]).

6. Vorrichtung gemäß einem der vorangehenden Ansprüche, bei der das Filter (404) konfiguriert ist zum Verarbeiten der Filtereingangsvektoren ($\tilde{\mathbf{H}}_{m}$[v]); ($\overline{\mathbf{H}}_{m}$[v]) derart, dass ein Rauschpegel der Mehrzahl der Referenzabtastwerte der Mehrzahl der Realisierungen des stochastischen Prozesses reduziert wird.

7. Vorrichtung gemäß einem der vorangehenden Ansprüche, bei der jeder der Mehrzahl der Filtereingangsvektoren ($\tilde{\mathbf{H}}_{m}$[v]) eine Mehrzahl von Schätzwerten von Referenzabtastwerten eines Mobilfunkkanals aufweist, wobei jeder der Mobilfunkkanäle einen Teilträger eines Mehrträgerkommunikationssystems entspricht, und wobei die Schätzwerte Pilotensymbolpositionen innerhalb eines Teilträgers entsprechen.

8. Vorrichtung gemäß einem der vorangehenden Ansprüche, bei der jeder der Mehrzahl der Filtereingangsvektoren ($\overline{\mathbf{H}}_{m}$[v]) Schätzwerte von Referenzabtastwerten von unterschiedlichen Mobilfunkkanälen aufweist, wobei jeder der Mobilfunkkanäle einem Teilträger eines Mehrträgerkommunikationssystems entspricht, und wobei die Schätzwerte Pilotensymbolpositionen an einem Zeitmoment (v) entsprechen.

9. Vorrichtung gemäß Anspruch 7 oder 8, bei der die Filterausgangswerte $\overline{H}_{m}$[v] interpolierte Kanalkoeffizientenschätzwerte sind, die die Mobilfunkkanalschätzwerte zwischen Pilotsymbolpositionen interpolieren.

10. Mobilkanalschätzer (700) zum Schätzen einer Mehrzahl von Mobilfunkkanälen an Nichtpilotpositionen, wobei jeder der Mobilfunkkanäle einem Teilträger eines Mehrträgerkommunikationssystems entspricht, der Mobilkanalschätzer eine Vorrichtung (400) aufweist gemäß einem der vorangehenden Ansprüche, jeder einer Mehrzahl von Filtereingangsvektoren ($\tilde{\mathbf{H}}_{m}$[v]); (

$$\breve{\mathbf{H}}_{m}[\nu]$$

) eine Mehrzahl von pilotbasierten Kanalschätzwerten der mehreren Mobilfunkkanäle aufweist.

11. Verfahren zum adaptiven Aktualisieren vorangehender Filterkoeffizienten (w[v]) eines digitalen Filters, um aktualisierte Filterkoeffizienten (**w**[v+1]) zu erhalten, wobei das Verfahren folgende Schritte aufweist:

Empfangen einer Mehrzahl von Filtereingangsvektoren ($\tilde{\mathbf{H}}_m[\nu]$);

$$\breve{\mathbf{H}}_m[\nu]$$

), wobei jeder derselben Referenzabtastwerte einer Mehrzahl von Realisierungen eines stochastischen Prozesses aufweist;
Filtern von jedem der Filtereingangsvektoren ($\tilde{\mathbf{H}}_m[\nu]$;

$$\breve{\mathbf{H}}_m[\nu]$$

) basierend auf den vorangehenden Filterkoeffizienten ($w[\nu]$), um eine Mehrzahl von Filterausgangswerten ($\overline{H}_m[\nu]$; $\hat{H}_m[\nu]$) zu erhalten, wobei sich jeder derselben auf eine unterschiedliche Realisierung des stochastischen Prozesses bezieht;
Bestimmen, für jeden der Filterausgangswerte ($\overline{H}_m[\nu]$; $\hat{H}_m[\nu]$), eines Fehlerwerts ($E_m[\nu]$) zwischen dem Filterausgangswert und einem entsprechenden Referenzabtastwert einer entsprechenden Realisierung des stochastischen Prozesses; und
Bestimmen der aktualisierten Filterkoeffizienten ($\mathbf{w}[\nu+1]$) basierend auf den vorangehenden Filterkoeffizienten ($\mathbf{w}[\nu]$);
**dadurch gekennzeichnet, dass**
die aktualisierten Filterkoeffizienten ($\mathbf{w}[\nu+1]$) gemäß der nachfolgenden Gleichung bestimmt werden:

$$\mathbf{w}[\nu+1] = \mathbf{w}[\nu] + \frac{\mu}{\sum\limits_{m \in \mathrm{IP}_{\mathbf{cp}}} \left\| \tilde{\mathbf{H}}_{\mathbf{m}}[\nu] \right\|^2} \cdot \sum\limits_{m \in \mathrm{IP}_{\mathbf{cp}}} \tilde{\mathbf{H}}_{\mathbf{m}}[\nu] \cdot \mathbf{E}_{\mathbf{m}}^{*}[\nu]$$

wobei:

$\mathbf{w}[\nu+1$ ein aktualisierter Filterkoeffizientenvektor ist,
$\mathbf{w}[\nu]$ ein vorangehender Filterkoeffizientenvektor ist,
$\underline{\mu}$ ein Schrittgrößenfaktor ist,
$\tilde{\mathbf{H}}_m[\nu]$ ein Filtereingangsvektor ist, und
$E_m^{*}[\nu]$ die konjugiert Komplexe des Fehlerwerts ist.

**12.** Verfahren gemäß Anspruch 11, bei dem
eine Filtereingangsmatrix ($\underline{\tilde{\mathbf{H}}}[\nu]$;

$$\underline{\breve{\mathbf{H}}}[\nu]$$

) durch die Mehrzahl der Filtereingangsvektoren ($\tilde{\mathbf{H}}_m[\nu]$;

$$\breve{\mathbf{H}}_m[\nu]$$

) als Spalten der Filtereingangsmatrix gebildet wird und ein Fehlervektor ($\mathbf{E}^H[\nu]$) durch die Mehrzahl der Fehlerwerte ($E_m[\nu]$) gebildet wird, und
die aktualisierten Filterkoeffizienten ($\mathbf{w}[\nu+1]$) gemäß der folgenden Gleichung bestimmt werden:

$$\mathbf{w}[\nu+1] = \mathbf{w}[\nu] + \frac{\mu}{\left\| \underline{\tilde{\mathbf{H}}}[\nu] \right\|_F^2} \cdot \underline{\tilde{\mathbf{H}}}[\nu] \cdot E^H[\nu]$$

wobei:

**w**[*v*+1] ein aktualisierter Filterkoeffizientenvektor ist,
w[v] ein vorangehender Filterkoeffizientenvektor ist,
μ ein Schrittgrößenfaktor ist,
**H**[*v*] die Filtereingangsmatrix ist, gebildet durch die Mehrzahl von Filterein- gangsvektoren,
 die Quadrat-Frobenius-Matrixnorm der Filtereingangsmatrix ist, und
**E**$^H$[v] der Hermitian-Fehlervektor ist, gebildet durch die Mehrzahl von Fehlerwer- ten.

**13.** Computerprogramm zum Ausführen der Schritte des Verfahrens gemäß Anspruch 11 oder 12, wenn das Computerprogramm auf einem Computer oder einer Mikrosteuerung ausgeführt wird.

**Revendications**

**1.** Dispositif (400) de mise à jour de manière adaptive des coefficients de filtre antérieurs (w[v]) d'un filtre numérique pour obtenir des coefficients de filtre mis à jour (w[v+1]), ledit dispositif comprenant:

une entrée (402) configurée pour recevoir une pluralité de vecteurs d'entrée de filtre, ($\tilde{H}_m[v]$);$\overline{H}_m[v]$) comprenant, chacun, des échantillons de référence d'une pluralité de réalisations d'un processus stochastique;
un filtre (404) configuré pour filtrer chacun des vecteurs d'entrée de filtre ($\tilde{H}_m[v]$);$\overline{H}_m[v]$) à base des coefficients de filtre antérieurs (w[v]) pour obtenir une pluralité de valeurs de sortie de filtre ($\hat{H}_m[v]$);$\hat{H}_m[v]$) relatives, chacune, à une réalisation différente du processus stochastique;
un processeur d'erreurs (406) configuré pour déterminer, pour chacune des valeurs de sortie de filtre, une valeur d'erreur (E$_m$[v]) entre la valeur de sortie de filtre ($\tilde{H}_m[v]$);$\hat{H}_m[v]$) et un échantillon de référence correspondant d'une réalisation correspondante du processus stochastique; et
un processeur de coefficients (408) configuré pour déterminer les coefficients de filtre mis à jour (w[v+1]) sur base des coefficients de filtre antérieurs (w[v]);
**caractérisé par le fait que**
le processeur de coefficients (408) est configuré pour déterminer les coefficients de filtre mis à jour (w[v+1]) selon l'équation suivante:

$$w[v+1] = w[v] = \frac{\mu}{\sum_{m \in IP_{ep}} \left\| \tilde{H}_m[v] \right\|^2} \cdot \sum_{m \in IP_{ep}} \tilde{H}_m[v] \cdot E_m^{\bullet}[v]$$

où:

w[v+1] est un vecteur de coefficients de filtre mis à jour,
w[v] est un vecteur de coefficients de filtre antérieurs,
μ est un facteur de pas,
$\tilde{H}_m[v]$ est un vecteur d'entrée de filtre, et
 est le conjugué complexe de la valeur d'erreur.

**2.** Dispositif selon la revendication 1, dans lequel
une matrice d'entrée de filtre ($\underline{\tilde{H}}_m[v]$);

$$\underline{\tilde{H}}_m[v]$$

) est formée par la pluralité de vecteurs d'entrée de filtre ($\tilde{H}_m[v]$);

$$\breve{H}_m[v]$$

) comme colonnes de la matrice d'entrée de filtre, et un vecteur d'erreur ($E^H[v]$) est formé par la pluralité des valeurs d'erreur ($E_m[v]$), et

le processeur de coefficients (408) est configuré pour déterminer les coefficients de filtre mis à jour ($w[v+1]$) selon l'équation suivante:

$$w[v+1] = w[v] + \frac{\mu}{\left\| \underline{\tilde{H}}_m[v] \right\|_F^2} \cdot \underline{\tilde{H}}_m[v] \cdot E^H[v]$$

où:

w[v+1] est un vecteur de coefficients de filtre mis à jour,
w[v] est un vecteur de coefficients de filtre antérieurs,
$\mu$ est un facteur de pas,
$\underline{\tilde{H}}[v]$ est une matrice d'entrée de filtre d'Hermite formée par une pluralité de vecteurs d'entrée de filtre,
 est une norme de matrice de Frobenius élevée au carré de la matrice d'entrée de filtre, et
$E^H[v]$ est un vecteur d'erreurs formé par une pluralité des valeurs des erreurs.

3. Dispositif selon la revendication 1 ou 2, dans lequel chacune les de la pluralité de valeurs de sortie de filtre ($\overline{H}_m[v]$) correspond à un échantillon interpolé d'une réalisation différente d'un processus stochastique correspondant à un moment d'échantillonnage spécifique entre deux moments d'échantillonnage adjacents (m; v) des échantillons de référence des vecteurs d'entrée de filtre ($\tilde{H}_m[v]$); $\overline{H}_m[v]$).

4. Dispositif selon l'une des revendications 1 à 3, dans lequel chaque vecteur d'entrée de filtre ($\overline{H}_m[v]$) comprend une pluralité d'échantillons de référence, dans lequel chacun des échantillons de référence correspond à une réalisation différente d'un processus stochastique, les différentes réalisations ayant essentiellement les mêmes propriétés statistiques, et dans lequel les échantillons de référence correspondent au même moment (v).

5. Dispositif selon la revendication 4, dans lequel chacune de la pluralité de valeurs de sortie de filtre ($\tilde{H}_m[v]$) correspond à une réalisation différente d'un processus stochastique à une fréquence spécifique entre deux fréquences adjacentes qui correspondent à des réalisations adjacentes du processus stochastique des échantillons de référence du vecteur d'entrée de filtre ($\overline{H}_m[v]$).

6. Dispositif selon l'une des revendications précédentes, dans lequel le filtre (404) est configuré pour traiter les vecteurs d'entrée de filtre ($\tilde{H}_m[v]$; $\overline{H}_m[v]$) de sorte que soit réduit un niveau de bruit de la pluralité d'échantillons de référence de la pluralité de réalisations du processus stochastique.

7. Dispositif selon l'une des revendications précédentes, dans lequel chacun de la pluralité de vecteurs d'entrée de filtre ($\tilde{H}_m[v]$) comprend une pluralité d'estimations des échantillons de référence d'un canal radioélectrique mobile, dans lequel chacun des canaux radioélectriques mobiles correspond à une sous-porteuse d'un système de communication à porteuses multiples, et dans lequel les estimations correspondent respectivement à des positions de symboles pilotes dans une sous-porteuse.

8. Dispositif selon l'une des revendications précédentes, dans lequel chacun de la pluralité de vecteurs d'entrée de filtre ($\tilde{H}_m[v]$) comprend des estimations d'échantillons de référence de différents canaux radioélectriques mobiles, dans lequel chacun des canaux radioélectriques mobiles correspond à une sous-porteuse d'un système de communication à porteuses multiples, et dans lequel les estimations correspondent respectivement à des positions de symboles pilotes à un moment (v).

9. Dispositif selon la revendication 7 ou 8, dans lequel les valeurs de sortie de filtre $\tilde{H}_m[v]$ sont des estimations interpolées des coefficients des canal qui interpolent les estimations des canaux radioélectriques mobiles entre les positions de symboles pilotes.

**10.** Estimateur de canaux mobiles (700) destiné à estimer une pluralité de canaux radioélectriques mobiles à des positions non pilotes, dans lequel
chacun des canaux radioélectriques mobiles correspond à une sous-porteuse d'un système de communication à porteuses multiples,
l'estimateur de canaux mobiles comprend un dispositif (400) selon l'une des revendications précédentes,
chacun d'une pluralité de vecteurs d'entrée de filtre ($\tilde{H}_m[v]$); $\overline{H}_m[v]$) comprend une pluralité d'estimations de canal sur base de pilotes de la pluralité de canaux radioélectriques mobiles.

**11.** Procédé pour la mise à jour de manière adaptive des coefficients de filtre antérieurs (w[v]) d'un filtre numérique, pour obtenir des coefficients de filtre mis à jour (w[v+1]), ledit procédé comprenant:

recevoir une pluralité de vecteurs d'entrée de filtre ($\tilde{H}_m[v]$); $\overline{H}_m[v]$) comprenant, chacun, des échantillons de référence d'une pluralité de réalisations d'un processus stochastique;
filtrer chacun des vecteurs d'entrée de filtre ($\tilde{H}_m[v]$ $\tilde{H}_m[v]$) sur base des coefficients de filtre antérieurs (w[v]) , pour obtenir une pluralité de valeurs de sortie de filtre ($\tilde{H}_m[v]$; $\hat{H}_m[v]$) relative, chacune, à une réalisation différente du processus stochastique;
déterminer, pour chacune des valeurs de sortie de filtre ($\tilde{H}_m[v]$; $\hat{H}_m[v]$), une valeur d'erreur (E$_m$[v]) entre la valeur de sortie de filtre et un échantillon de référence correspondant à une réalisation correspondante du processus stochastique; et
déterminer les coefficients de filtre mis à jour (w[v+1]) sur base des coefficients de filtre antérieurs (w[v]) ;
**caractérisé par le fait que**
les coefficients de filtre mis à jour (w[v+1]) sont déterminés selon l'équation suivante:

$$w[v+1] = w[v] + \frac{\mu}{\displaystyle\sum_{m \in IP_{ep}} \left\| \tilde{H}_m[v] \right\|^2} \cdot \sum_{m \in IP_{ep}} \tilde{H}_m[v] \cdot E_m^*[v]$$

où:

w[v+1] est un vecteur de coefficients de filtre mis à jour,
w[v] est un vecteur de coefficients de filtre antérieurs,
$\mu$ est un vecteur de pas,
($\tilde{H}_m[v]$ est un vecteur d'entrée de filtre, et
$E^*_m[v]$ est le conjugué complexe de la valeur d'erreurs.

**12.** Procédé selon la revendication 11, dans lequel
une matrice d'entrée de filtre ($\tilde{H}_m[v]$; $\hat{H}_m[v]$) est formée par la pluralité de vecteurs d'entrée de filtre ($\tilde{H}_m[v]$; $\hat{H}_m[v]$) comme colonnes de la matrice d'entrée de filtre et un vecteur d'erreur (E$^H$[v]) est formé par la pluralité de valeurs d'erreur (E$_m$[v]) , et les coefficients de filtre mis à jour (w[v+1]) sont déterminés selon l'équation suivante:

$$w[v+1] = w[v] + \frac{\mu}{\left\| \underline{\tilde{H}}_m[v] \right\|_F^2} \cdot \underline{\tilde{H}}_m[v] \cdot E^H[v]$$

où:

w[v+1] est un vecteur de coefficients de filtre mis à jour,
w[v] est un vecteur de coefficients de filtre antérieurs,
$\mu$ est un facteur de pas,
$\underline{\tilde{H}}_m[v]$ est une matrice d'entrée de filtre formée par une pluralité de vecteurs d'entrée de filtre,
est une norme de matrice de Frobenius élevée au carré de la matrice d'entrée de filtre, et
E$^H$[v] est un vecteur d'erreur d'Hermite formé par une pluralité de valeurs d'erreur.

**13.** Programme d'ordinateur pour réaliser les étapes du procédé selon la revendication 11 ou 12 lorsque le programme d'ordinateur est exécuté sur un ordinateur ou un microcontrôleur.

subcarrier m

time index ν

$M^{(t)}$

$M^{(f)}$

102 104 104 $M^{(f)}$ 102

## FIG 1A

subcarrier m

time index ν

$M^{(t)}$

102 104 104
104 104

$M^{(f)}$

## FIG 1B

200

START

interpolation in time direction ⌒202

interpolation in frequency direction ⌒204

END

FIG 2

interpolation in time
direction                    —202a

smoothing in time direction    —202b

202

FIG 3

FIG 4

EP 2 285 053 B1

FIG 5

204

interpolation in frequency direction — 204a

smoothing in frequency direction — 204b

# FIG 6

FIG 7

## FIG 8A

## FIG 8B

## FIG 8C

## FIG 8D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. K. Cavers.** An Analysis of Pilot Symbol Assisted Modulation for Rayleigh Fading Channels. *IEEE Trans. Vehic. Technol.,* November 1991, vol. VT-40, 686-693
- **P. Höher ; S. Kaiser ; P. Robertson.** Pilot-Symbol-Aided Channel Estimation in Time and Frequency. *Proc. Communication Theory Mini-Conf. (CTMC) within IEEE Global Telecommun. Conf. (Globecom'97),* 1997, 90-96
- **P. Hoeher ; S. Kaiser ; P. Robertson.** Two-dimensional pilot-symbol-aided channel estimation by Wiener filtering. *In Proc. ICASSP 1997, IEEE International Conference on Acoustics, Speech, and Signal Processing,* April 1997, vol. 3, 1845-1848
- **C. Rohde et al.** Block Processing for One-Dimensional Adaptive Channel Estimation Algorithms for OFDM Systems. *Waveform Diversity and Design Conference,* 08 February 2009, 72-36
- **Rohde et al.** Comparison of One-Dimensional Adaptive Channel Estimation Techniques for OFDM Systems. *International OFDM Workshop (INOWO'08),* 28 August 2008, 1-5
- **P. Hoeher ; S. Kaiser ; P. Robertson.** Two-dimensional pilot-symbol-aided channel estimation by Wiener filtering. *Proc. ICASSP 1997, IEEE International Conference on Acoustics, Speech, and Signal Processing,* April 1997, vol. 3, 1845-1848
- **Y. Li ; L.J. Cimini ; N.R. Sollenberger.** Robust Channel Estimation for OFDM Systems with Rapid Dispersive Fading Channels. *IEEE Trans. Commun.,* July 1998, vol. 46, 902-915
- **G. Auer.** Efficient Implementation of Robust OFDM Channel Estimation. *Proc. PIMRC 2005, 16th Int. Symposium on Personal, Indoor and Mobile Radio Communications,* 2005